# EUROPEAN PATENT APPLICATION

(11) **EP 4 716 301 A1**
(43) Date of publication of application: **25.03.2026**
(21) Application number: 24818657.9
(22) Date of filing: 04.06.2024
(51) Int. Cl.: H04W 36/00

(54) **COMMUNICATION METHOD AND APPARATUS**

(30) Priority: 07.06.2023 CN 202310674780
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN); ZHONG, Yaping, Shenzhen, Guangdong 518129 (CN); ZHENG, Lili, Shenzhen, Guangdong 518129 (CN)
(74) Representative: Gill Jennings & Every LLP
(86) International application number: PCT/CN2024/097371
(87) International publication number: WO 2024/251125

(57) **Abstract**

This application relates to the field of communication technologies, and provides a communication method and apparatus, to resolve a problem that in non-terrestrial network communication, because a terminal performs measurement on all candidate cells configured by a network, measurement redundancy exists, resulting in energy waste of the terminal. The method includes: A network device determines at least one candidate cell, and sends first indication information to the terminal, where the first indication information indicates a condition for the terminal to perform measurement on at least one candidate cell.

## Description

This application claims priority to Chinese Patent Application No. 202310674780.7, filed with the China National Intellectual Property Administration on June 7, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In non-terrestrial network (Non-Terrestrial Network, NTN) communication, non-terrestrial network devices such as satellites or high altitude platform station (high altitude platform station, HAPS) devices may be used to implement communication services for terminals. In the NTN, the terminals perform cell handover due to high-speed movement of the non-terrestrial network devices.

In an existing handover procedure, a network device may configure a plurality of candidate cells for a terminal, and the terminal may measure the plurality of candidate cells, determine a target cell from the plurality of candidate cells, and access the target cell to complete handover. For the NTN communication, in consideration of periodic high-speed movement of non-terrestrial network devices, candidate cells generally cover a terminal device in sequence. In other words, the candidate cells generally do not provide coverage for the terminal at the same time. The terminal hands over to target cells successively in a sequence in which the non-terrestrial network devices provide coverage for the terminal.

Therefore, in the NTN, if a network device configures a plurality of candidate cells for a terminal, and the terminal performs measurement on all the configured candidate cells, invalid measurement is caused, resulting in energy waste of the terminal.

### SUMMARY

### SUMMARY

This application provides a communication method and apparatus, to resolve a problem of energy waste of a terminal caused by measuring all configured candidate cells by the terminal.

To achieve the foregoing objective, this application uses the following technical solutions.

According to a first aspect, a communication method is provided. The method includes: determining at least one candidate cell; and sending first indication information to a terminal, where the first indication information indicates a condition for the terminal to perform measurement on the at least one candidate cell.

According to the communication method provided in this application, a network device indicates, to the terminal, the condition for performing the measurement on the at least one candidate cell, so that the terminal can start measurement on a candidate cell that meets the measurement execution condition in the at least one candidate cell. This can avoid that the terminal performs measurement on all configured candidate cells, and resolve a problem of energy waste caused by invalid measurement.

In an implementation, the first indication information indicates time information for starting measurement on one or more candidate cells in the at least one candidate cell. The network device may indicate, to the terminal, the time information for starting the measurement on the candidate cells, so that the terminal may determine, based on the time information, start time for separately performing measurement on different candidate cells. This can avoid a problem of terminal energy waste caused by measuring all candidate cells by the terminal, and improve indication flexibility.

In an implementation, time of starting measurement on each candidate cell is not earlier than coverage start time of the candidate cell. In other words, a moment at which the terminal starts the measurement on each candidate cell should be later than a moment at which coverage of the candidate cell for the terminal starts, or a moment at which coverage of the candidate cell for the terminal starts may be used as a moment at which the measurement is started on the candidate cell, to avoid that the terminal starts measurement on a candidate cell that does not provide a service.

In an implementation, the first indication information includes coordinated universal time (Coordinated Universal Time, UTC) information for starting the measurement on the one or more candidate cells.

In an implementation, the first indication information includes coverage start time of the one or more candidate cells. The terminal may autonomously determine, based on the coverage start time of the candidate cell, the time for starting the measurement on the candidate cell, to avoid invalid measurement on the candidate cell.

In an implementation, the first indication information indicates the terminal to determine, based on a distance or an angle between the terminal and a reference point corresponding to one or more candidate cells in the at least one candidate cell, to start measurement on the one or more candidate cells. In the foregoing implementation, a value of a distance or an angle between the terminal and a satellite corresponding to a candidate cell may be used as a determining condition for performing measurement on the candidate cell, to avoid invalid measurement on the candidate cell and improve indication flexibility.

In an implementation, the method further includes: sending a first threshold to the terminal, where the first threshold indicates to start the measurement on the candidate cells when a distance between the terminal and a reference point corresponding to the candidate cells meets a distance range corresponding to the first threshold; or sending a second threshold to the terminal, where the second threshold indicates to start the measurement on the candidate cells when an angle between the terminal and a reference point corresponding to the candidate cells meets an angle range corresponding to the second threshold. A threshold of a distance or angle threshold for starting the measurement on the candidate cell is set, so that when cell handover is performed, the value of the distance or the angle between the terminal and the satellite corresponding to the candidate cell is calculated, and is compared with the set distance threshold or angle threshold to determine whether to start the measurement on the candidate cell, thereby improving indication flexibility.

In an implementation, the first threshold or the second threshold is carried in the first indication information or a radio resource control (Radio Resource Control, RRC) reconfiguration message.

In an implementation, the first indication information includes location information of the reference point.

In an implementation, the first indication information further includes ephemeris information and reference time of the ephemeris information.

In an implementation, the first indication information indicates the terminal to start measurement only on one or more candidate cells for a next time of cell handover.

In an implementation, the first indication information is carried in the RRC reconfiguration message.

In an implementation, the method may be applied to NTN communication.

According to a second aspect, a communication method is provided. The method is applied to a terminal. The method includes: receiving first indication information from a network device, where the first indication information indicates a condition for the terminal to perform measurement on at least one candidate cell.

In an implementation, the first indication information indicates time information for starting measurement on one or more candidate cells in the at least one candidate cell.

In an implementation, time of starting measurement on each candidate cell is not earlier than coverage start time of the candidate cell.

In an implementation, the first indication information includes UTC information for starting the measurement on the one or more candidate cells.

In an implementation, the first indication information includes coverage start time of the one or more candidate cells.

In an implementation, the first indication information indicates the terminal to determine, based on a distance or an angle between the terminal and a reference point corresponding to one or more candidate cells in the at least one candidate cell, to start measurement on the one or more candidate cells.

In an implementation, the method further includes: sending a first threshold to the terminal; and starting the measurement on the candidate cells when a distance between the terminal and a reference point corresponding to the candidate cells meets a distance range corresponding to the first threshold; or sending a second threshold to the terminal; and starting the measurement on the candidate cells when an angle between the terminal and a reference point corresponding to the candidate cells meets an angle range corresponding to the second threshold.

In an implementation, the first indication information includes location information of the reference point.

In an implementation, the first indication information further includes ephemeris information and reference time of the ephemeris information.

In an implementation, the first indication information indicates the terminal to start measurement only on one or more candidate cells for a next time of cell handover.

In an implementation, the method may be applied to NTN communication.

According to a third aspect, a communication method is provided. The method is applied to a network device. The method includes: determining at least one candidate cell; and sending second indication information to a terminal, where the second indication information indicates to delete, after the terminal hands over to a target cell, configuration information of the at least one candidate cell and/or configuration information of a source cell for a current time of cell handover. In the foregoing implementation, the network device may indicate the terminal to delete the configuration information of the candidate cell and/or the configuration information of the source cell after the cell handover is completed. Correspondingly, the network device may release a corresponding cell resource, to avoid long-time invalid resource reservation and effectively improve resource utilization.

In an implementation, the second indication information includes first duration, and the first duration indicates to delete, after the first duration expires or times out, configuration information of at least one candidate cell and/or the configuration information of the source cell for the current time of cell handover.

In an implementation, the second indication information indicates the terminal to delete, after the terminal performs L1/L2 triggered mobility (L1/L2 Triggered Mobility, LTM) handover, the configuration information of the at least one candidate cell and/or the configuration information of the source cell for the current time of cell handover.

In an implementation, the method further includes: receiving identification information of at least one candidate cell from the terminal. Therefore, the network device may release a resource of the candidate cell based on the received identification information of the candidate cell, to improve resource utilization.

In an implementation, the method further includes: receiving a cell handover completion indication message from the terminal; and releasing a resource of at least one candidate cell corresponding to the current time of cell handover of the terminal. In other words, after the terminal completes the cell handover, the network device may initiate resource release for the candidate cell, to improve resource utilization.

In an implementation, the method further includes: receiving a request message for releasing a candidate cell resource from the terminal; and releasing the resource of the at least one candidate cell corresponding to the current time of cell handover of the terminal. The terminal may initiate a resource release request to the network device, so that the network device can release a resource for the candidate cell based on the request of the terminal, to improve resource utilization.

In an implementation, if the network device accessed by the terminal includes a central unit (central unit, CU) and a distributed unit (distributed unit, DU), releasing the resource of the candidate cell corresponding to the current time of cell handover of the terminal specifically includes: The DU sends a release request to the CU, to request to release the resource of the candidate cell; the CU determines, based on the release request, to release the resource of the candidate cell, and sends a release response to the DU; and the DU releases, based on the release response, the resource of the candidate cell corresponding to the current time of cell handover of the terminal.

In an implementation, the terminal performs cell handover between a plurality of candidate cells corresponding to one DU, or performs cell handover between a plurality of candidate cells corresponding to a plurality of DUs, where the plurality of DUs correspond to a same CU.

In an implementation, if the network device accessed by the terminal includes a CU and a DU, releasing the resource of the candidate cell corresponding to the current time of cell handover of the terminal specifically includes: The CU sends a release request to a CU corresponding to the target cell, to request to release the resource of the candidate cell; the CU corresponding to the target cell sends, based on the release request, a release request to a DU corresponding to the target cell, to request to release the resource of the candidate cell; and the DU corresponding to the target cell deletes, based on the release request, the resource of the candidate cell corresponding to the current time of cell handover of the terminal.

In an implementation, the terminal hands over from a source cell corresponding to the CU to the target cell, where the CU corresponding to the target cell is different from the CU.

In an implementation, the method may be applied to NTN communication.

According to a fourth aspect, a communication method is provided. The method is applied to a terminal. The method includes: receiving second indication information from a network device; handing over to a target cell; and deleting, based on the second indication information, configuration information of a source cell and/or configuration information of at least one candidate cell for a current time of cell handover.

In an implementation, the second indication information includes first duration, and deleting the configuration information of the target cell and the configuration information of the at least one candidate cell for the current time of cell handover specifically includes: after the first duration expires or times out, deleting the configuration information of the source cell and/or the configuration information of the at least one candidate cell for the current time of cell handover.

In an implementation, the second indication information indicates the terminal to delete, after the terminal performs LTM handover, the configuration information of the source cell and/or the configuration information of the at least one candidate cell for the current time of cell handover.

In an implementation, the method further includes: sending identification information of the at least one candidate cell to the network device, where the identification information indicates the terminal to delete the configuration information of the at least one candidate cell.

In an implementation, the method may be applied to NTN communication.

According to a fifth aspect, a communication method is provided. The method is applied to a network device. The method includes: determining at least one candidate cell corresponding to a terminal; and sending an RRC reconfiguration message to the terminal, where the RRC reconfiguration message includes first configuration information, the first configuration information includes configuration information of the at least one candidate cell, and different terminals correspond to different first configuration information; broadcasting second configuration information, where the second configuration information includes configuration information of a part of the at least one candidate cell, the part of the candidate cell is candidate cells corresponding to a next time of cell handover performed by the terminal, and different candidate cells correspond to different second configuration information.

In the foregoing implementation, a network side broadcasts common configuration information of the candidate cell through a broadcast message, so that when sending the configuration information of the candidate cell to the terminal, the network side does not need to send the common configuration information of the candidate cell to each terminal. This reduces signaling overheads generated when the candidate cell is configured. Further, when the network side configures candidate cells for a plurality of times of cell handover for the terminal, a current serving cell may broadcast only common configuration information of a candidate cell on which the terminal performs a next time of cell handover, so that signaling overheads caused by broadcasting the common configuration information of the candidate cell by the network device can be reduced.

In an implementation, the method further includes: receiving a cell handover completion indication message from the terminal; and releasing a resource of at least one candidate cell corresponding to the current time of cell handover of the terminal. After the terminal completes the cell handover, the network device may initiate resource release for the candidate cell, to improve resource utilization.

In an implementation, the method further includes: receiving a request message for releasing a candidate cell resource from the terminal; and releasing the resource of the at least one candidate cell corresponding to the current time of cell handover of the terminal.

In an implementation, if the network device accessed by the terminal includes a CU and a DU, releasing the resource of the candidate cell corresponding to the current time of cell handover of the terminal specifically includes: The DU sends a release request to the CU, to request to release the resource of the candidate cell; the CU determines, based on the release request, to release the resource of the candidate cell, and sends a release response to the DU; and the DU releases, based on the release response, the resource of the candidate cell corresponding to the current time of cell handover of the terminal.

In an implementation, the terminal performs cell handover between a plurality of candidate cells corresponding to one DU, or performs cell handover between a plurality of candidate cells corresponding to a plurality of DUs, where the plurality of DUs correspond to a same CU.

In an implementation, if the network device accessed by the terminal includes a CU and a DU, releasing the resource of the candidate cell corresponding to the current time of cell handover of the terminal specifically includes: The CU sends a release request to a CU corresponding to the target cell, to request to release the resource of the candidate cell; the CU corresponding to the target cell sends, based on the release request, a release request to a DU corresponding to the target cell, to request to release the resource of the candidate cell; and the DU corresponding to the target cell deletes, based on the release request, the resource of the candidate cell corresponding to the current time of cell handover of the terminal.

In an implementation, the terminal hands over from a source cell corresponding to the CU to the target cell, where the CU corresponding to the target cell is different from the CU.

In an implementation, the method may be applied to NTN communication.

According to a sixth aspect, a communication method is provided. The method is applied to a terminal. The method includes: receiving an RRC reconfiguration message from a network device, where the RRC reconfiguration message includes first configuration information, the first configuration information includes configuration information of at least one candidate cell, and different terminals correspond to different first configuration information; and receiving second configuration information broadcast by the network device, where the second configuration information includes configuration information of a part of the at least one candidate cell, the part of the candidate cell is candidate cells corresponding to a next time of cell handover performed by the terminal, and different candidate cells correspond to different second configuration information.

In an implementation, the method further includes: performing cell handover based on the RRC reconfiguration message to hand over to a target cell; and sending a cell handover completion indication message to the network device, where the cell handover completion indication message indicates the network device to release a resource of at least one candidate cell corresponding to the current time of cell handover of the terminal.

In an implementation, the method further includes: performing cell handover based on the RRC reconfiguration message, to hand over to a target cell; and sending, to the network device, a request message for releasing a candidate cell resource, where the request message indicates the network device to release a resource of a candidate cell corresponding to the terminal.

In an implementation, the method may be applied to NTN communication.

According to a seventh aspect, a communication apparatus is provided, where the apparatus includes: a processing module, configured to determine at least one candidate cell; and a transceiver module, configured to send first indication information to a terminal, where the first indication information indicates a condition for the terminal to perform measurement on the at least one candidate cell.

In an implementation, the first indication information indicates time information for starting measurement on one or more candidate cells in the at least one candidate cell.

In an implementation, time of starting measurement on each candidate cell is not earlier than coverage start time of the candidate cell.

In an implementation, the first indication information includes UTC information for starting the measurement on the one or more candidate cells.

In an implementation, the first indication information includes coverage start time of the one or more candidate cells.

In an implementation, the first indication information indicates the terminal to determine, based on a distance or an angle between the terminal and a reference point corresponding to one or more candidate cells in the at least one candidate cell, to start measurement on the one or more candidate cells.

In an implementation, the transceiver module is further configured to: send a first threshold to the terminal, where the first threshold indicates to start the measurement on the candidate cells when a distance between the terminal and a reference point corresponding to the candidate cells meets a distance range corresponding to the first threshold; or send a second threshold to the terminal, where the second threshold indicates to start the measurement on the candidate cells when an angle between the terminal and a reference point corresponding to the candidate cells meets an angle range corresponding to the second threshold.

In an implementation, the first threshold or the second threshold is carried in the first indication information or an RRC reconfiguration message.

In an implementation, the first indication information includes location information of the reference point.

In an implementation, the first indication information further includes ephemeris information and reference time of the ephemeris information.

In an implementation, the first indication information indicates the terminal to start measurement only on one or more candidate cells for a next time of cell handover.

In an implementation, the first indication information is carried in the RRC reconfiguration message.

In an implementation, the communication apparatus may be used in NTN communication.

According to an eighth aspect, a communication apparatus is provided. The apparatus includes a transceiver module, configured to receive first indication information from a network device, where the first indication information indicates a condition for a terminal to perform measurement on at least one candidate cell.

In an implementation, the first indication information indicates time information for starting measurement on one or more candidate cells in the at least one candidate cell.

In an implementation, time of starting measurement on each candidate cell is not earlier than coverage start time of the candidate cell.

In an implementation, the first indication information includes UTC information for starting the measurement on the one or more candidate cells.

In an implementation, the first indication information includes coverage start time of the one or more candidate cells.

In an implementation, the first indication information indicates the terminal to determine, based on a distance or an angle between the terminal and a reference point corresponding to one or more candidate cells in the at least one candidate cell, to start measurement on the one or more candidate cells.

In an implementation, the transceiver module is further configured to: send a first threshold to the terminal; and start the measurement on the candidate cells when a distance between the terminal and a reference point corresponding to the candidate cells meets a distance range corresponding to the first threshold; or send a second threshold to the terminal; and start the measurement on the candidate cells when an angle between the terminal and a reference point corresponding to the candidate cells meets an angle range corresponding to the second threshold.

In an implementation, the first indication information includes location information of the reference point.

In an implementation, the first indication information further includes ephemeris information and reference time of the ephemeris information.

In an implementation, the first indication information indicates the terminal to start measurement only on one or more candidate cells for a next time of cell handover.

In an implementation, the communication apparatus may be used in NTN communication.

According to a ninth aspect, a communication apparatus is provided, where the apparatus includes: a processing module, configured to determine at least one candidate cell; and a transceiver module, configured to send second indication information to a terminal, where the second indication information indicates to delete, after the terminal hands over to a target cell, configuration information of the at least one candidate cell and/or configuration information of a source cell for a current time of cell handover.

In an implementation, the second indication information includes first duration, and the first duration indicates to delete, after the first duration expires or times out, configuration information of at least one candidate cell and/or the configuration information of the source cell for the current time of cell handover.

In an implementation, the second indication information indicates the terminal to delete, after the terminal performs L1/L2 triggered mobility LTM handover, the configuration information of the at least one candidate cell and/or the configuration information of the source cell for the current time of cell handover.

In an implementation, the transceiver module is further configured to receive identification information of at least one candidate cell from the terminal.

In an implementation, the transceiver module is further configured to receive a cell handover completion indication message from the terminal; and the apparatus further includes a processing module, configured to release a resource of at least one candidate cell corresponding to the current time of cell handover of the terminal.

In an implementation, the transceiver module is further configured to receive a request message for releasing a candidate cell resource from the terminal; and the apparatus further includes a processing module, configured to release the resource of the at least one candidate cell corresponding to the current time of cell handover of the terminal.

In an implementation, if the communication apparatus includes a CU and a DU, releasing the resource of the candidate cell corresponding to the current time of cell handover of the terminal specifically includes: The DU sends a release request to the CU, to request to release the resource of the candidate cell; the CU determines, based on the release request, to release the resource of the candidate cell, and sends a release response to the DU; and the DU releases, based on the release response, the resource of the candidate cell corresponding to the current time of cell handover of the terminal.

In an implementation, the terminal performs cell handover between a plurality of candidate cells corresponding to one DU, or performs cell handover between a plurality of candidate cells corresponding to a plurality of DUs, where the plurality of DUs correspond to a same CU.

In an implementation, if the communication apparatus includes a CU and a DU, releasing the resource of the candidate cell corresponding to the current time of cell handover of the terminal specifically includes: The CU sends a release request to a CU corresponding to the target cell, to request to release the resource of the candidate cell; the CU corresponding to the target cell sends, based on the release request, a release request to a DU corresponding to the target cell, to request to release the resource of the candidate cell; and the DU corresponding to the target cell deletes, based on the release request, the resource of the candidate cell corresponding to the current time of cell handover of the terminal.

In an implementation, the terminal hands over from a source cell corresponding to the CU to the target cell, where the CU corresponding to the target cell is different from the CU.

In an implementation, the communication apparatus may be used in NTN communication.

According to a tenth aspect, a communication apparatus is provided. The communication apparatus includes: a transceiver module, configured to receive second indication information from a network device; and a processing module, configured to hand over to a target cell. The processing module is further configured to delete, based on the second indication information, configuration information of a source cell and/or configuration information of at least one candidate cell for a current time of cell handover.

In an implementation, the second indication information includes first duration, and the processing module is specifically configured to: after the first duration expires or times out, delete the configuration information of the source cell and/or the configuration information of the at least one candidate cell for the current time of cell handover.

In an implementation, the second indication information indicates a terminal to delete, after the terminal performs LTM handover, the configuration information of the source cell and/or the configuration information of the at least one candidate cell for the current time of cell handover.

In an implementation, the transceiver module is further configured to send identification information of the at least one candidate cell to the network device, where the identification information indicates the terminal to delete the configuration information of the at least one candidate cell.

In an implementation, the communication apparatus may be used in NTN communication.

According to an eleventh aspect, a communication apparatus is provided. The apparatus includes: a processing module, configured to determine at least one candidate cell corresponding to a terminal; and a transceiver module, configured to send an RRC reconfiguration message to the terminal, where the RRC reconfiguration message includes first configuration information, the first configuration information includes configuration information of the at least one candidate cell, and different terminals correspond to different first configuration information. The transceiver module is further configured to broadcast second configuration information, where the second configuration information includes configuration information of a part of the at least one candidate cell, the part of the candidate cell is candidate cells corresponding to a next time of cell handover performed by the terminal, and different candidate cells correspond to different second configuration information.

In an implementation, the transceiver module is further configured to: receive a cell handover completion indication message from the terminal; and release a resource of at least one candidate cell corresponding to a current time of cell handover of the terminal.

In an implementation, the transceiver module is further configured to: receive a request message for releasing a candidate cell resource from the terminal; and release the resource of the at least one candidate cell corresponding to the current time of cell handover of the terminal.

In an implementation, if the communication apparatus includes a CU and a DU, releasing the resource of the candidate cell corresponding to the current time of cell handover of the terminal specifically includes: The DU sends a release request to the CU, to request to release the resource of the candidate cell; the CU determines, based on the release request, to release the resource of the candidate cell, and sends a release response to the DU; and the DU releases, based on the release response, the resource of the candidate cell corresponding to the current time of cell handover of the terminal.

In an implementation, the terminal performs cell handover between a plurality of candidate cells corresponding to one DU, or performs cell handover between a plurality of candidate cells corresponding to a plurality of DUs, where the plurality of DUs correspond to a same CU.

In an implementation, if the communication apparatus includes a CU and a DU, releasing the resource of the candidate cell corresponding to the current time of cell handover of the terminal specifically includes: The CU sends a release request to a CU corresponding to the target cell, to request to release the resource of the candidate cell; the CU corresponding to the target cell sends, based on the release request, a release request to a DU corresponding to the target cell, to request to release the resource of the candidate cell; and the DU corresponding to the target cell deletes, based on the release request, the resource of the candidate cell corresponding to the current time of cell handover of the terminal.

In an implementation, the terminal hands over from a source cell corresponding to the CU to the target cell, where the CU corresponding to the target cell is different from the CU.

In an implementation, the communication apparatus may be used in NTN communication.

According to a twelfth aspect, a communication apparatus is provided. The apparatus includes a transceiver module, configured to: receive an RRC reconfiguration message from a network device, where the RRC reconfiguration message includes first configuration information, the first configuration information includes configuration information of at least one candidate cell, and different terminals correspond to different first configuration information; and receive second configuration information broadcast by the network device, where the second configuration information includes configuration information of a part of the at least one candidate cell, the part of the candidate cell is candidate cells corresponding to a next time of cell handover performed by a terminal, and different candidate cells correspond to different second configuration information.

In an implementation, the apparatus further includes a processing module, configured to perform cell handover based on the RRC reconfiguration message to hand over to a target cell. The transceiver module is further configured to send a cell handover completion indication message to the network device, where the cell handover completion indication message indicates the network device to release a resource of at least one candidate cell corresponding to the current time of cell handover of the terminal.

In an implementation, the apparatus further includes a processing module, configured to perform cell handover based on the RRC reconfiguration message, to hand over to a target cell. The transceiver module is further configured to send, to the network device, a request message for releasing a candidate cell resource, where the request message indicates the network device to release a resource of a candidate cell corresponding to the terminal.

In an implementation, the communication apparatus may be used in NTN communication.

According to a thirteenth aspect, a communication apparatus is provided. The apparatus includes one or more processors and one or more memories. The one or more memories are coupled to the one or more processors, the one or more memories are configured to store computer program code, the computer program code includes computer instructions, and when the one or more processors execute the computer instructions, the communication apparatus is enabled to perform the method according to any one of the first aspect to the sixth aspect.

According to a fourteenth aspect, a computer-readable storage medium is provided. The computer-readable storage medium stores computer-executable instructions; and when the computer-executable instructions are invoked by a computer, the computer-executable instructions are used to enable the computer to perform the method according to any one of the first aspect to the sixth aspect.

According to a fifteenth aspect, a computer program product including instructions is provided. When the computer program product runs on a computer, the computer is enabled to perform the method according to any one of the first aspect to the sixth aspect.

According to a sixteenth aspect, a chip is provided. The chip is coupled to a memory, and is configured to: read and execute program instructions stored in the memory, to implement the method according to any one of the first aspect to the sixth aspect.

It may be understood that any communication apparatus, computer-readable storage medium, computer program product, or chip provided in the seventh aspect to the sixteenth aspect may be implemented by using the corresponding method provided above. Therefore, for beneficial effect that can be achieved, refer to beneficial effect in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of a system architecture of an access network device according to an embodiment of this application;
FIG. 3 is a diagram of an architecture of a communication system for NTN communication according to an embodiment of this application;
FIG. 4 is a diagram of an architecture of another communication system for NTN communication according to an embodiment of this application;
FIG. 5 is a diagram of a satellite working mode according to an embodiment of this application;
FIG. 6 is a diagram of another satellite working mode according to an embodiment of this application;
FIG. 7 is a schematic flowchart of cell handover according to an embodiment of this application;
FIG. 8 is a schematic flowchart of LTM handover according to an embodiment of this application;
FIG. 9A is a diagram of cell sequential handover according to an embodiment of this application;
FIG. 9B is a schematic flowchart of conditional handover according to an embodiment of this application;
FIG. 10 to FIG. 12 are schematic flowchart 1 to schematic flowchart 3 of a communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes the technical solutions in embodiments of this application with reference to the accompanying drawings in embodiments of this application.

An implementation environment and an application scenario of embodiments of this application are briefly described first.

Technical solutions in embodiments of this application may be applied to an NTN communication system. The following describes the technical solutions in this application with reference to the accompanying drawings.

NTN communication is a deployment scenario of a non-terrestrial network including a satellite system, a high altitude platform station (high altitude platform station, HAPS), or the like. In the NTN communication, a wireless communication service is implemented through a wide-area coverage capability of a non-terrestrial network device like a satellite. The non-terrestrial network device described in this application may also be referred to as an air network device, for example, a network device that may be deployed in the air, including a satellite, a HAPS device, an uncrewed aerial vehicle device, or the like. This is not limited. In this application, an example in which a satellite is used as an air network device is used for description.

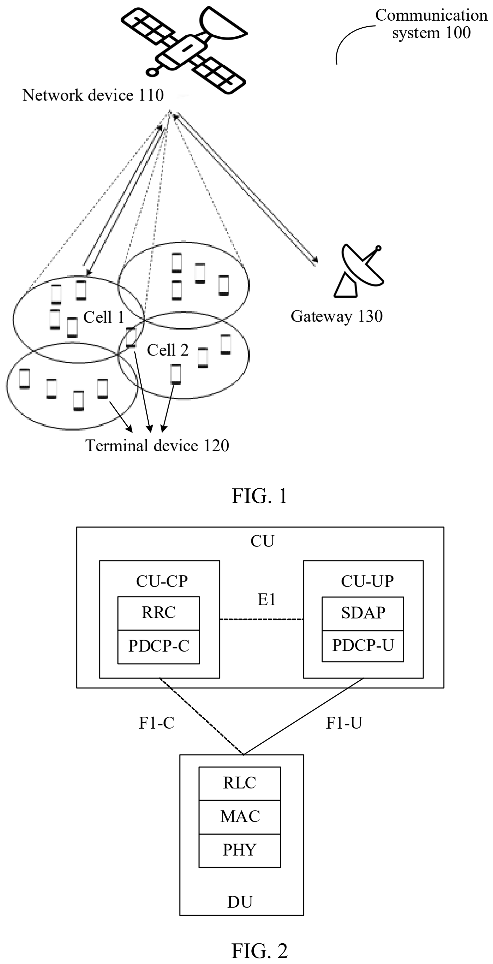

To help understand embodiments of this application, a communication system usable in embodiments of this application is first described with reference to FIG. 1. FIG. 1 is a diagram of an architecture of a communication system applicable to an embodiment of this application. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a radio link. For example, as shown in FIG. 1, the network device 110 may manage a cell 1 and a cell 2, and provide a communication service for terminal devices located in the cell 1 and the cell 2. However, when a terminal device is located in an overlapping area of the cell 1 and the cell 2, a handover process described in this embodiment of this application occurs. The handover in this application is a process in which the terminal device moves in a service state and changes a serving cell.

It should be understood that the network device in the communication system 100 may include an access network device, and is a radio access network (radio access network, RAN) node (or device) that connects a terminal to a wireless network, for example, a base station.

Examples of some RAN nodes are: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and the like. In addition, the RAN node may also be a device that provides a base station function in device-to-device (Device-to-Device, D2D) communication, vehicle to everything (vehicle to everything, V2X) communication, or machine-type communication (machine-type communication, MTC), a satellite, a base station in a future communication system, or the like. This is not limited.

In addition, in a network structure, the access network device may include a central unit (central unit, CU) node and/or a distributed unit (distributed unit, DU) node. As shown in FIG. 2, in a gNB including a CU node and a DU node, functions of a part of protocol layers are centrally controlled in a CU, and functions of a part or all of remaining protocol layers are distributed in a DU, and the CU controls the DU in a centralized manner. Further, the CU may be further divided into a control plane (CU-CP) and a user plane (CU-UP). The CU-CP is used for a control plane function, and mainly includes an RRC layer and a PDCP layer corresponding to the control plane, namely, a PDCP-C layer. The CU-UP is used for a user plane function, and may include an SDAP layer and a PDCP layer corresponding to the user plane, namely, a PDCP-U layer. The CU-CP and the CU-UP are connected through an E1 interface. On behalf of the gNB, the CU-CP is connected to a core network through an NG interface, and is connected to the DU through an F1 interface-control plane, namely, F1-C. The CU-UP is connected to the DU through an F1 interface-user plane, namely, F1-U. In another possible implementation, the PDCP-C layer is also in the CU-UP.

In different systems, the CU (including a CU-CP or a CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP.

The terminal device in the communication system 100 may also be referred to as a terminal, a subscriber unit, a subscriber station, a mobile station, a mobile console, a remote station, a remote terminal device, a mobile device, user equipment (user equipment, UE), a wireless communication device, a user agent, or a user apparatus. The terminal device provided in this application may be used in various communication scenarios, for example, D2D communication, V2X communication, MTC, internet of things (internet of things, IOT), virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, and smart city (smart city). The terminal device may be a mobile phone (mobile phone), a tablet computer (pad), a computer with a wireless transceiver function, a wearable device, an aerospace device, an uncrewed aerial vehicle device, or the like. In embodiments of this application, a chip used in the foregoing device may also be referred to as a terminal device.

In addition, as shown in FIG. 1, the communication system may further include a gateway 130. The gateway 130 may provide communication services for a beam coverage area of a network device, for example, a satellite. The gateway 130 may be configured to connect the base station to the core network. In addition, as a management, switching and control center of a non-terrestrial communication system, the gateway 130 may be used for processing such as signal access, user authentication management, service admission control and data exchange in an NTN system.

The following describes an implementation environment of this application in detail by using an example in which the communication system shown in FIG. 1 is used in an NTN communication scenario.

The NTN system may include at least one air network device. The network device 110 shown in FIG. 1 is an air network device. For example, the network device 110 may be a satellite. The NTN system may further include at least one terminal device, for example, the terminal device 120 shown in FIG. 1.

The satellite may be an artificial earth satellite serving as a radio communication relay station. The satellite implements radio communication between the satellite and earth stations or between earth stations and a spacecraft by forwarding radio signals. The satellite may perform transmission of information such as a telephone, a telegram, a fax, data, and a television.

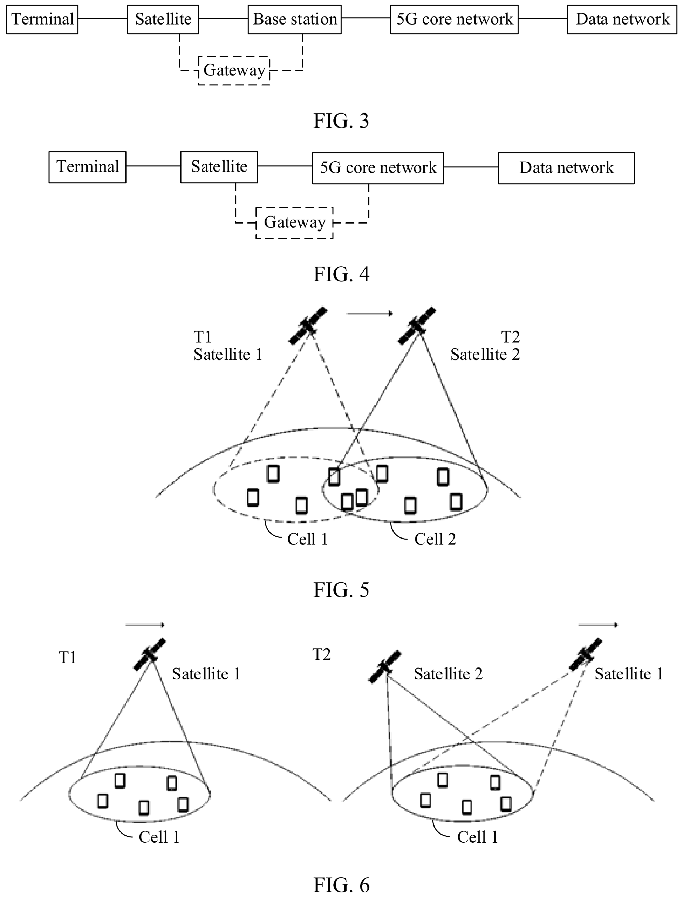

According to a working mode of the satellite, the satellite can work in a transparent transmission mode or a regeneration mode. When the satellite works in the transparent transmission mode, the satellite, serving as a relay forwarding device, may forward a signal of another network device or the terminal device 120. This may be used as enhanced processing for terrestrial network coverage. The satellite is used to filter, convert, and amplify radio frequencies. That is, the satellite is mainly used for L1 (layer 1) forwarding, regenerates a signal at a physical layer, and does not have a function of another higher protocol layer. As shown in FIG. 3, transparent forwarding may be performed between a terminal and a base station through a satellite, to implement communication with a 5G core network and a data network.

In a scenario, when the satellite works in the transparent transmission mode, the satellite may be used as a relay forwarding device between the gateway 130 and the terminal device 120, and is configured to forward a communication signal between the gateway 130 and the terminal device 120.

When the satellite works in the regeneration mode, the satellite has a signal processing capability. It may be understood that the satellite has a processing function of the base station, and can send a signal to another network device or the terminal device 120, to provide a communication service for the terminal device 120. As shown in FIG. 4, the terminal establishes wireless communication with the satellite through a Uu interface, to implement communication with the 5G core network and the data network.

In addition, when satellites work in the regeneration working mode, the satellites may be further classified into a regeneration satellite without an inter-satellite link and a regeneration satellite with an inter-satellite link depending on whether there is an inter-satellite link (inter-satellite link, ISL) between the satellites. It may be understood that there is an ISL between satellites, that is, there is an interface between the satellites that may be used to directly exchange data. For example, the interface of the inter-satellite link may be an Xn interface, and the satellites may exchange data through the Xn interface. In addition, in a scenario, the regeneration satellite may have a DU processing function of the base station, and the satellite may be used as a DU node.

Usually, satellites can be classified into a geostationary earth orbit (geostationary earth orbit, GEO) satellite, a medium earth orbit (medium earth orbit, MEO) satellite, and a low earth orbit (low Earth orbit, LEO) satellite based on an altitude of a satellite operating orbit. A higher orbit of a satellite indicates a larger coverage area of a serving cell corresponding to the satellite and a longer communication delay. For example, a GEO is a synchronous earth satellite orbit, and a satellite operating in this orbit is stationary relative to the ground. A LEO and a MEO are collectively referred to as a not geosynchronous orbit (not geosynchronous orbit, NGSO), and a satellite operating in this type of orbit moves at a high speed relative to the ground.

For the NGSO, depending on whether beams of a satellite move with the satellite, an earth moving cell (earth moving cell) and an earth fixed cell (earth fixed cell) may be further obtained through classification.

For the earth moving cell, a direction of a beam of a satellite moves with the satellite. Therefore, a cell range covered by the beam of the satellite moves relative to the ground. As shown in FIG. 5, the satellite covers a cell 1 at a moment T1, and a cell covered by the satellite at a moment T2 is a cell 2. It can be learned that, as a satellite moves at a high speed, there are constantly terminals connecting the satellite and then disconnecting from the satellite. For the NGSO, high-speed movement of a satellite causes frequent handover of users, and frequent handover of a large quantity of users cause large signaling overheads.

For the earth fixed cell, within specific time, a satellite antenna may use a beamforming capability of the satellite antenna to point a beam to an area on the ground (which may be referred to as gaze). Therefore, a cell range covered by the beam of a satellite is fixed relative to the ground. As shown in FIG. 6, a satellite 1 covers a cell 1 from a moment T1 to a moment T2. After the moment T2, gazing at the cell 1 of by the satellite 1 ends, and a satellite 2 covers the cell 1 within a period of time. Therefore, when a satellite is about to move out of a gazed-at cell range, all terminals in the cell 1 need to hand over to a cell covered by a next satellite. For example, the terminals need to hand over from the satellite 1 to the satellite 2. Similarly, simultaneous handover of a large quantity of terminals causes large signaling overheads, and causes a signaling storm, thereby causing signaling congestion.

A handover procedure of a terminal is usually controlled by a network device. To be specific, the network device sends a handover message to indicate a cell to which the terminal hands over and how to perform the handover. After receiving the handover message, the terminal accesses a target cell based on content included in the handover message. Therefore, a network side needs to obtain an identifier of the target cell.

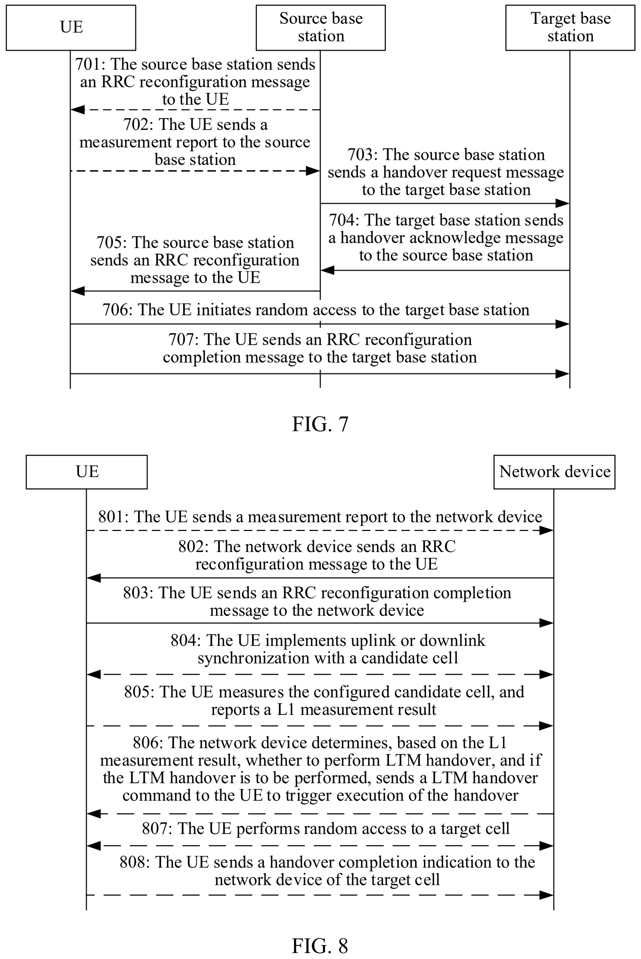

As shown in FIG. 7, a communication system may include: UE that performs handover; an access network device to which a source cell belongs, namely, a source base station; and an access network device to which a target cell belongs, namely, a target base station. A specific handover procedure may include the following steps.

701: The source base station sends an RRC reconfiguration message to the UE.

The RRC reconfiguration message is used to indicate the UE to perform measurement, and may include at least one of the following parameters: a measurement object, a report configuration, a measurement identifier, and the like.

702: The UE sends a measurement report to the source base station.

The UE performs measurement based on a measurement configuration in the RRC reconfiguration message, generates the measurement report, and sends the measurement report to the source base station, to report various measurement events to the source base station.

Step 701 and step 702 are optional.

703: The source base station sends a handover request message to the target base station.

Specifically, the source base station receives the measurement report that is reported by the UE, determines one or more candidate cells based on a measurement result, and performs handover decision. An access network device corresponding to the target cell may be the target base station. When a decision result of the source base station is handover, the source base station may send the handover request message to the target base station.

704: The target base station sends a handover acknowledge message to the source base station.

Specifically, the target base station determines whether to allow access of the UE, and if determining to allow the access of the UE, sends the handover acknowledge message to the source base station. The handover acknowledge message may include configuration information required for the UE to access the target base station. For example, the configuration information required for the UE to access the target base station may include one or more of the following: a target cell ID, an encryption algorithm, a key, measurement configuration information, system information of the target cell, a new cell-radio network temporary identifier (Cell-Radio Network Temporary Identifier, C-RNTI) allocated by the target base station to the UE, a random access channel (random access channel, RACH) resource (which may also be referred to as a random access resource, and is described below by using the random access resource as an example) for accessing the target cell, a physical layer configuration parameter corresponding to the target cell, a medium access control (medium access control, MAC) layer configuration parameter, a radio link control (radio link control, RLC) layer configuration parameter, a packet data convergence protocol (packet data convergence protocol, PDCP) layer configuration parameter, a service data adaptation protocol (service data adaptation protocol, SDAP) layer configuration parameter, a radio resource control (radio resource control, RRC) layer configuration parameter, and the like. The random access resource may include one or more of the following: a random access configuration periodicity, configuration information of a random access format, configuration information of at least one random access occasion (RACH occasion), configuration information of a preamble associated with each random access occasion (for example, a quantity of preambles and/or index information of the preamble), and the like. Optionally, the configuration information required for the UE to access the target base station may be carried in a form of an RRC message. For example, the target base station generates an RRC reconfiguration message, and the handover acknowledge message carries the RRC message.

Optionally, the source base station and the target base station may be a same base station, or may be different base stations.

705: The source base station sends an RRC reconfiguration message to the UE.

Specifically, after receiving the handover acknowledge message sent by the target base station, the source base station sends the RRC reconfiguration message to the UE. The RRC reconfiguration message may include the information indicated in the handover acknowledge message in step 704, or may be the RRC reconfiguration message generated by the target base station in step 704. In step 705, the RRC reconfiguration message sent by the source base station to the UE may also be referred to as a handover command.

The target cell may be one of the one or more candidate cells, or may be a serving cell other than the candidate cells.

It may be understood that, to be distinguished from the candidate cells, in embodiments of this application, a serving cell that the UE accesses after the cell handover is implemented is referred to as a target cell. This is not described again in subsequent embodiments.

706: The UE initiates random access to the target base station.

Specifically, the UE may initiate a random access request to the target base station (a base station of the target cell) according to the handover command, and successfully access the target base station by interacting with the target base station. In an existing handover procedure, UE disconnects from a source base station, and a temporary interruption occurs when the UE receives and sends data before the UE successfully accesses the target base station.

707: The UE sends an RRC reconfiguration completion message to the target base station.

After the UE successfully accesses the target base station, the UE may send the RRC reconfiguration completion message to the target base station.

In the foregoing inter-cell handover procedure, when a terminal moves from a coverage area of one cell to a coverage area of another cell, the terminal may perform serving cell handover at a moment. The foregoing cell handover procedure is performed based on an L3 measurement result. For example, selection and decision of a target cell for handover is performed based on the L3 measurement result. In addition, the handover is triggered by RRC signaling. Therefore, the procedure may be referred to as an L3 handover procedure. All procedures require complete layer 2 (layer 2, L2) and layer 1 (layer 1, L1) resetting, and therefore more delays and signaling overheads are introduced.

To further reduce a handover delay, an L1/L2 mobility enhancement solution, namely, L1/L2 triggered mobility (L1/L2 triggered mobility, LTM) handover, is proposed, that is, the handover of the serving cell is performed by using L1/L2 signaling, to achieve objectives of a low delay, low overheads, and short data interruption time.

There are the following scenarios: 1. The terminal hands over between a plurality of cells corresponding to one DU, for example, intra-gNB DU (intra-gNB DU) handover. 2. The terminal hands over between a plurality of cells of different DUs corresponding to one CU, for example, inter-gNB DU intra-gNB CU (inter-gNB DU intra-gNB CU) handover. 3. The terminal hands over between a plurality of cells corresponding to different CUs, for example, inter-gNB CU (inter-gNB CU) handover. In the LTM handover, which is the same as the L3 handover, the network device may select the target cell based on the L3 measurement result. The target cell may be selected by a gNB-CU. The network device may deliver LTM handover configuration information to the UE through the RRC reconfiguration message.

A difference between the LTM handover and the L3 handover is that the LTM handover is determined and triggered by the L1/L2. For example, the UE reports an L1 measurement result to a gNB DU, and the gNB DU performs handover decision based on the measurement result and delivers a handover command to the UE through a MAC control element (control element, CE). After the LTM handover is completed, the UE may store configuration information of the plurality of previously configured candidate cells (including the target cell). Therefore, when the UE needs to hand over to the candidate cells next time, the network device may directly deliver a handover command without sending the configuration information of the candidate cells again, so that a handover configuration process can be omitted, and a handover delay can be reduced.

In an implementation, for a scenario of handover between different cells of a same base station, as shown in FIG. 8, a LTM handover procedure may include the following steps.

801: UE sends a measurement report to a network device.

Specifically, the UE may measure all candidate cells configured by the network device for the UE, to generate the measurement report.

Correspondingly, the network device receives the measurement report, determines, based on the measurement report, to perform LTM handover, and triggers candidate cell preparation.

The network device may be specifically a base station including a CU and a DU. The UE may perform LTM handover between different serving cells corresponding to the base station.

Step 801 is optional.

802: The network device sends an RRC reconfiguration message to the UE.

The RRC reconfiguration message may include configuration information of a candidate cell, and there may be one or more candidate cells. In the LTM handover procedure, these candidate cells are also referred to as LTM candidate cells. Optionally, the configuration information of the candidate cell may include one or more of the following: a cell radio network temporary identifier allocated by the candidate cell to the terminal device, a random access channel for accessing the candidate cell, an identifier of the candidate cell, a physical layer configuration parameter corresponding to the candidate cell, a medium access control layer configuration parameter, a radio link control layer configuration parameter, a packet data convergence protocol layer configuration parameter, a service data adaptation protocol layer configuration parameter, a radio resource control layer configuration parameter, and the like.

Optionally, the RRC reconfiguration message further carries an identifier corresponding to the configuration information of the candidate cell.

803: The UE sends an RRC reconfiguration completion message to the network device.

The UE receives the RRC reconfiguration message, stores the configuration information of the candidate cell in the RRC reconfiguration message, and sends the RRC reconfiguration completion message to the network device.

Optionally, the LTM handover procedure may further include an advance synchronization phase, and may specifically include step 804.

804: The UE implements uplink or downlink synchronization with the candidate cell.

Specifically, before receiving a handover command (a handover command in the LTM is a handover command in step 806), the UE may perform downlink synchronization with the candidate cell.

Before receiving the handover command, the UE obtains timing advance (timing advance, TA) corresponding to the candidate cell in advance. A method for obtaining, by the UE, the timing advance corresponding to the candidate cell in advance is not limited in this application.

805: The UE measures the configured candidate cell, and reports an L1 measurement result.

A sequence of step 804 and step 805 is not limited in this application.

806: The network device determines, based on the L1 measurement result, whether to perform LTM handover, and if the LTM handover is to be performed, sends an LTM handover command to the UE to trigger execution of the handover.

The LTM handover command may be a MAC CE. The MAC CE may carry an identifier of configuration information of a target cell, and the UE uses a corresponding configuration of the target cell based on the identifier.

Optionally, if the UE needs to perform a random access procedure when handing over to the target cell, step 807 may be further included. For example, if step 804 is not performed, that is, the UE does not obtain the TA to implement synchronization, step 807 may be further included.

807: The UE performs random access to the target cell.

808: The UE sends a handover completion indication to the network device of the target cell.

For example, the UE sends the RRC reconfiguration completion message to the network device to which the target cell belongs. Optionally, a network device of a source cell and the network device of the target cell may be the same, as shown in FIG. 8. Alternatively, the network device of the source cell and the network device of the target cell may be different, for example, are respectively a network device 1 and a network device 2.

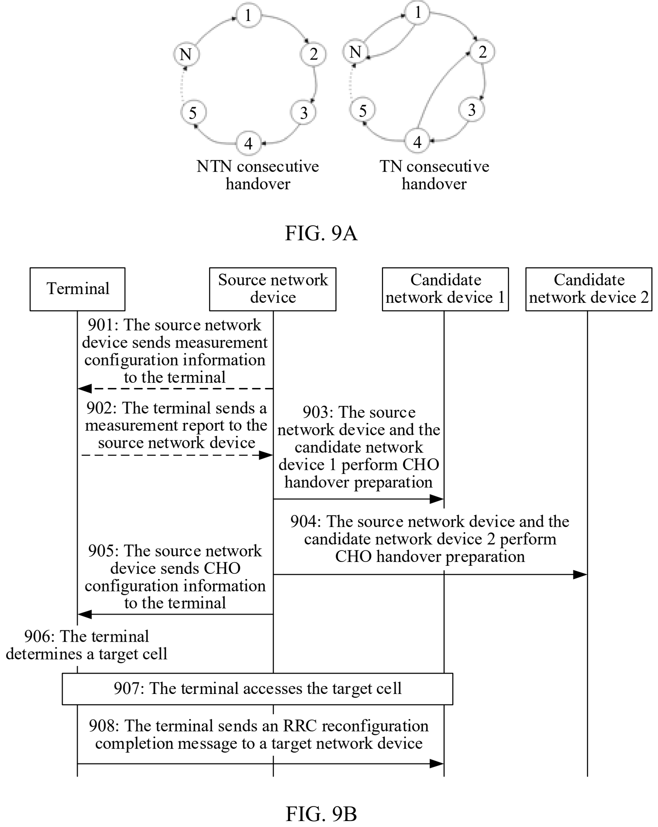

Optionally, after step 808, the UE may continue to perform, based on the configuration in step 802, step 804 to step 808 to hand over to another candidate cell. To be specific, the foregoing LTM procedure may be applied to a scenario in which a terminal performs handover consecutively. As shown in FIG. 9A, in a communication scenario of a terrestrial network (terrestrial network, TN), movement of UE is random, and therefore a sequence of consecutive handover of the UE is also random, and neither a network device nor the UE can learn of a cell to which the UE is to hand over next. For example, the UE currently accesses a cell 1, and may subsequently hand over to a cell 2, a cell 3, or a cell 4. A cell to which the UE hands over is related to a moving location of the UE. Therefore, each hop of handover of the UE is unknown. For example, the UE hands over from the cell 1 to the cell 4, and after the handover is completed, the UE may store configuration information of the cell 2 and the cell 3. When the UE needs to hand over from the cell 4 to the cell 2 subsequently, the network device may not need to re-deliver a configuration of the cell 2 to the UE. The UE directly measures the candidate cell, and reports a measurement result. When a handover condition is met, the network device directly triggers handover according to an LTM handover command (for example, a MAC CE). In a consecutive handover scenario, in an LTM handover procedure, the UE stores configurations of candidate cells. When the UE needs to hand over to a cell to which the UE hands over previously or another candidate cell, the network device may not need to send configuration information of these candidate cells to the UE, and only needs to send a LTM handover command, so that a handover process can be accelerated.

However, in an NTN scenario, because movement of a satellite is periodic, the terminal usually regularly performs handover in a specific sequence. As shown in FIG. 9A, a cell handover sequence of the UE may be: the cell 1→the cell 2→the cell 3→the cell 4→a cell 5→...→a cell N→the cell 1→the cell 2→the cell 3→.... It can be learned that, a plurality of candidate cells provide signal coverage for a location range of the UE in a sequence, and a candidate cell provides signal coverage for the location range again in a next periodicity after the coverage ends. Therefore, if movement of the UE is ignored and only the movement of the satellite is considered, consecutive cell handover in the NTN scenario may be considered as periodic or regular.

In an implementation, the cell handover in this application may be conditional handover (conditional handover, CHO).

A CHO mechanism is that handover is performed based on CHO trigger condition information (which may also be referred to as CHO execution condition information). A network device (referred to as a source network device for short) to which a source cell belongs may send CHO configuration information to the terminal device when communication link quality is good. The CHO configuration information includes CHO trigger condition information corresponding to one or more candidate cells and information about the one or more candidate cells.

The information about the candidate cell may include one or more of the following: a cell radio network temporary identifier allocated by the candidate cell to the terminal device, a random access channel resource (which may also be referred to as a random access resource) for accessing the candidate cell, an index corresponding to the candidate cell (for example, a measurement identifier (measID) corresponding to the candidate cell and/or a CHO reconfiguration identifier (CondReconfigId) corresponding to the candidate cell), a cell global identifier (cell global identifier, CGI) of the candidate cell, a physical cell identifier (physical cell identifier, PCI) of the candidate cell, frequency information corresponding to the candidate cell, a physical layer configuration parameter, a MAC layer configuration parameter, an RLC layer configuration parameter, a PDCP layer configuration parameter, an SDAP layer configuration parameter, an RRC layer configuration parameter corresponding to the candidate cell, and the like. The random access resource may include one or more of the following: a random access configuration periodicity, configuration information of a random access format, configuration information of at least one random access occasion (RACH occasion), configuration information of a preamble associated with each random access occasion (for example, a quantity of preambles and/or index information of the preamble), and the like. The frequency information of the candidate cell may include one or more of the following: an absolute frequency of a synchronization signal block (synchronization signal block, SSB) (absoluteFrequencySSB), an absolute frequency point (absoluteFrequencyPointA) of a reference resource module (common RB0), a frequency band list (frequencyBandList), and a carrier list specific to a subcarrier spacing (subcarrier spacing, SCS) (scs-SpecificCarrierList). For meanings of the foregoing terms, for example, refer to a specification of a protocol or a standard of the communication technology.

The CHO trigger condition information may also be referred to as CHO execution condition information. The CHO trigger condition information indicates a CHO trigger condition of the candidate cell. In this application, the CHO trigger condition information may include one or more of the following:
1. Based on signal quality. The signal quality in this application is a result obtained by measuring signal quality or signal energy based on a reference signal (for example, an SSB, a CSI-RS, a CS-RS, a US-RS, or a DMRS), for example, one or more of reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR). For meanings of the foregoing terms, for example, refer to a specification of a protocol or a standard of the communication technology. The CHO trigger condition information may include a CHO trigger event type, a trigger quantity (trigger quantity), and a corresponding threshold. The CHO trigger event type may include an event A3, an event A4, an event A5, an event B1, an event B2, another trigger event type, or the like. For details, refer to a specification of a protocol or a standard of the communication technology. The trigger quantity is signal quality of a cell. For example, it is assumed that a CHO trigger event type configured for a candidate cell 1 is an A3 event, a trigger quantity is signal quality of the cell, and a corresponding threshold is a threshold 1. When the cell signal quality of the candidate cell 1 is higher than the threshold 1, it may be considered that the candidate cell 1 meets a CHO trigger condition, and the candidate cell 1 may be determined as a target cell.
2. Based on location information. The CHO trigger condition information may include the location information. In a possible implementation, the location information may be location information of a terminal device on the ground, for example, a longitude and latitude value. The longitude and latitude value may be used to determine an area or a fixed point. When a geographical location of the terminal device meets a longitude and latitude requirement (for example, the terminal device moves to an area or a fixed point location indicated by the longitude and latitude value), the terminal device may perform handover. In another possible implementation, the location information may include a distance between the terminal device and a location reference point 1 corresponding to a source cell and a distance between the terminal device and a location reference point 2 corresponding to a target cell. For example, the CHO trigger condition information may include a first distance threshold and a second distance threshold. When the distance between the terminal device and the location reference point 1 corresponding to the source cell is greater than or equal to the first distance threshold, and the distance between the terminal device and the location reference point 2 corresponding to the target cell is less than or equal to the second distance threshold, the UE may perform handover. In still another possible implementation, the location information may be global positioning system (global positioning system, GPS) information, timing advance (timing advance, TA) information, or other information.
3. Based on time information or a timer. The CHO trigger condition information may include the time information. In a possible implementation, the CHO trigger condition information may be absolute time, for example, a moment (for example, coordinated universal time (coordinated universal time, UTC) 12:00), a time period (for example, UTC 12:00 to UTC 13:00, or a start moment and duration of a time period). When the absolute time is reached, the terminal device may perform handover. In another possible implementation, the CHO trigger condition information may be relative time, for example, effective duration of a timer. For example, after receiving CHO configuration information, the terminal device starts the timer, and when the effective duration of the timer is reached, the terminal device may perform handover.

Optionally, in this application, at least one of the three types of CHO trigger condition information may be configured as the CHO execution condition information. For example, a CHO execution event type, a corresponding threshold, and an absolute time value may be configured as CHO execution condition information. When absolute time is reached and signal quality of a corresponding candidate cell meets a condition, the terminal device may determine the candidate cell as a target cell, and perform handover.

Optionally, one candidate cell may correspond to one or more pieces of CHO trigger condition information. CHO trigger condition information corresponding to different candidate cells may be the same or different.

For ease of understanding, the following describes, with reference to FIG. 9B, a procedure in which the terminal device performs handover based on the CHO mechanism. In this example, the source network device configures two candidate cells for the terminal device, and the two candidate cells are respectively managed by a candidate network device 1 and a candidate network device 2.

As shown in FIG. 9B, the handover procedure may include the following steps.

901: The source network device sends measurement configuration information to the terminal.

Correspondingly, the terminal receives the measurement configuration information from the source network device.

Optionally, the measurement configuration information may be carried in an RRC reconfiguration message. The measurement configuration information is used by the terminal to perform neighboring cell measurement. This is not limited herein.

A neighboring cell mentioned in this application is a neighboring cell of the terminal, and includes one or more of an intra-frequency cell, an inter-frequency cell, and a serving cell. The intra-frequency cell indicates a cell whose SSB for measurement has a central frequency (central frequency) and a subcarrier spacing (subcarrier spacing, SCS) that are the same as those of a cell-defining (cell-defining) SSB of the serving cell. The inter-frequency cell is a cell whose SSB for measurement has either a central frequency or an SCS different from that of the cell-defining SSB of the serving cell. The serving cell is a cell that provides a service for the terminal. The serving cell may be a cell managed by the source network device, a cell covered by the source network device, or a cell under the jurisdiction of the source network device, or the serving cell belongs to the source network device.

Step 901 may be an optional step.

902: The terminal sends a measurement report to the source network device.

The measurement report (measurement report) includes a measurement result of neighboring cell measurement performed by the terminal based on the measurement configuration information.

Correspondingly, the source network device receives the measurement report from the terminal.

The measurement result in this application may be signal quality of the neighboring cell of the terminal, or the like. This is not limited herein.

Step 902 may be an optional step.

903: The source network device and the candidate network device 1 perform CHO handover preparation.

For example, the source network device sends a handover request message to the candidate network device 1, where the handover request message is used to request the candidate network device 1 to prepare for CHO handover; and the source network device receives a handover request acknowledge message from the candidate network device 1, where the handover request acknowledge message may include, for example, information about a candidate cell 1. The handover request acknowledge message may be understood as carrying the information about the candidate cell 1 configured by the candidate network device 1 for the terminal, and the information about the candidate cell 1 may be carried in a form of an RRC message of the candidate network device 1.

904: The source network device and the candidate network device 2 perform CHO handover preparation.

For example, the source network device sends a handover request message to the candidate network device 2, where the handover request message is used to request the candidate network device 2 to prepare for CHO handover; and the source network device receives a handover request acknowledge message from the candidate network device 2, where the handover request acknowledge message may include, for example, information about a candidate cell 2. The handover request acknowledge message may be understood as carrying the information about the candidate cell 2 configured by the candidate network device 2 for the terminal, and the information about the candidate cell 2 may be carried in a form of an RRC message of the candidate network device 2.

905: The source network device sends CHO configuration information to the terminal.

The CHO configuration information includes CHO trigger condition information respectively corresponding to the candidate cell 1 and the candidate cell 2.

Correspondingly, the terminal receives the CHO configuration information from the source network device.

The CHO configuration information may be carried in an RRC message generated by the source network device, for example, an RRC reconfiguration message. The CHO configuration information may further include the information about the candidate cell 1 and the information about the candidate cell 2. Optionally, CHO trigger condition information of the candidate cell 1 and CHO trigger condition information of the candidate cell 2 are information generated by the source network device for the terminal.

When the CHO trigger condition information of the candidate cell 1 is CHO trigger condition information based on time information, the source network device may further send the CHO trigger condition information to the candidate network device 1. When the CHO trigger condition information of the candidate cell 2 is CHO trigger condition information based on the time information, the source network device may further send the CHO trigger condition information to the candidate network device 2.

906: The terminal determines a target cell.

Specifically, the terminal may determine, based on the CHO configuration information, whether the respective CHO trigger condition information of the candidate cell 1 and the candidate cell 2 is met, and use a cell that meets the CHO trigger condition information in the candidate cell 1 and the candidate cell 2 as the target cell (for example, the candidate cell 1 is the target cell).

In other words, in this step, the terminal measures each candidate cell, and determines whether a CHO trigger condition of each candidate cell is met.

907: The terminal accesses the target cell.

For example, the terminal initiates, through a random access resource, random access to a network device of the target cell (referred to as a target network device for short). A specific random access procedure is not limited herein.

908: The terminal sends an RRC reconfiguration completion message to the target network device.

For example, the target network device is the candidate network device 1, and the terminal may send the RRC reconfiguration completion message to the candidate network device 1.

Correspondingly, the candidate network device 1 receives the RRC reconfiguration completion message from the terminal.

The RRC reconfiguration completion message indicates that the terminal successfully accesses the candidate network device 1. Optionally, the RRC reconfiguration completion message may further include an identifier of the target cell.

It may be understood that after the terminal determines the candidate cell 1 as the target cell, the candidate network device 1 may also be referred to as the target network device.

It should be noted that FIG. 9B is merely an example of the CHO procedure, and the CHO procedure may have other variations. This is not limited in this application. The steps in FIG. 9B may be optionally performed, and an execution sequence of the steps may be changed.

Therefore, in an NTN scenario, a network device configures a plurality of candidate cells for a terminal. If the terminal performs measurement on all the configured candidate cells, measurement redundancy or invalid measurement exists, resulting in energy waste of the terminal. In view of this, this application proposes a communication method, to optimize time for starting measurement on a plurality of candidate cells on a terminal side, to avoid or reduce redundant measurement performed by the terminal on the candidate cells, and resolve a problem of energy waste of the terminal.

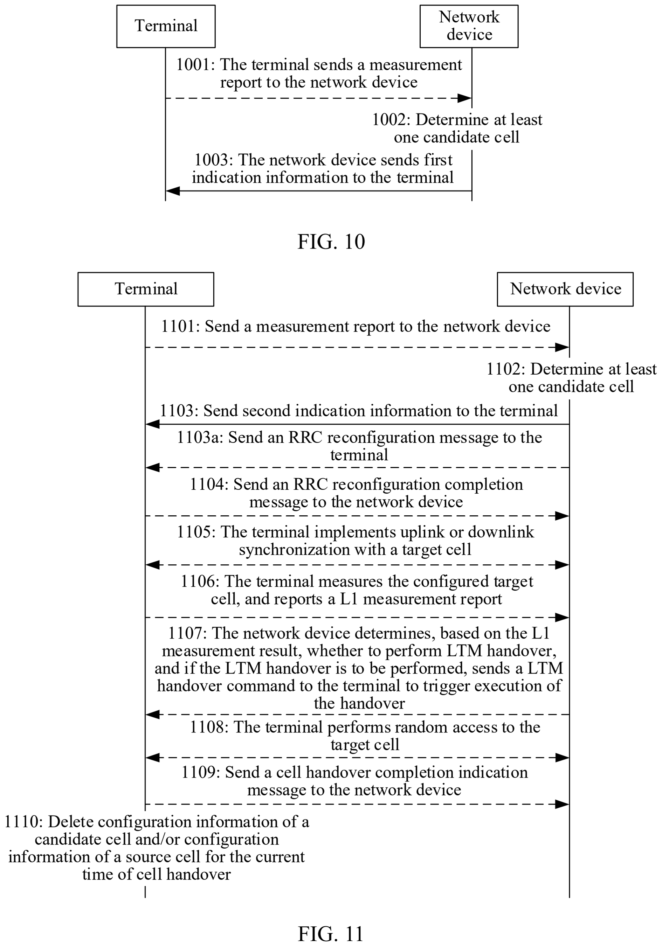

The technical solutions provided in this application may be performed by a terminal and a network device, or may be performed by a module and/or a component (for example, a chip or an integrated circuit) that are/is mounted in a terminal or a network device and that have/has a corresponding function. This is not limited in this application. The following embodiments in FIG. 10 to FIG. 12 are described by using a terminal and a network device as execution bodies. The network device described in the following embodiments may be an access network device like a base station.

An embodiment of this application provides a communication method. The method may be applied to an NTN communication scenario, for example, applied to the foregoing satellite communication scenario in which a transparent transmission mode or a regeneration mode is used. As shown in FIG. 10, the method may include the following steps.

1001: The terminal sends a measurement report to the network device.

1002: The network device determines at least one candidate cell.

For example, the network device may determine the at least one candidate cell based on the received measurement report.

Step 1001 and step 1002 are optional.

1003: The network device sends first indication information to the terminal.

The first indication information indicates a condition for the terminal to perform measurement on the at least one candidate cell. In other words, when the network device configures a plurality of candidate cells for the terminal, the terminal does not need to measure all candidate cells, but may conditionally start measurement on a part of the candidate cells. Specifically, the network device sends the first indication information to the terminal, where the first indication information indicates a determining condition for starting measurement on each candidate cell, so that the terminal may determine, based on the condition that is included in the first indication information and that is for performing the measurement on the candidate cell, whether to start the measurement on the candidate cell. Optionally, the measurement in this step may be measurement on signal quality of the candidate cell, or may be measurement on another measurement quantity related to the candidate cell, for example, measurement on a distance between the terminal and a reference point of the candidate cell. This is not limited in this application.

In an implementation, the network device sends an RRC reconfiguration message to the terminal, and sends configuration information of the candidate cell to the terminal. The first indication information may be carried in the RRC reconfiguration message, or may be carried in another message, or may be separately sent. This is not limited in this application. For example, for LTM handover, when the network device sends the configuration information of the candidate cell to the terminal, the network device sends the first indication information to the terminal. In other words, the first indication information is carried in step 802 in the LTM procedure.

In the following, embodiments of this application propose the following several determining conditions for starting the measurement on the candidate cell, including manners of determining, based on measurement start time, based on a distance, based on an angle, or the like, to start the measurement, and several different indication manners separately corresponding to the first indication information.

### (1) Measurement start time

In an implementation, the first indication information may indicate time information for starting measurement on one or more candidate cells in the at least one candidate cell.

It may be understood that the network device may indicate, through the first indication information, the time information for starting the measurement on each candidate cell.

It can be learned from the foregoing content that, in the NTN scenario, as a satellite moves at a high speed, a coverage area for the ground, namely, a serving cell, periodically moves. In this case, for a terminal, a serving cell of the terminal may change regularly with the movement of the satellite. For example, the terminal accesses several candidate cells in a specific sequence, as shown in FIG. 9A. Therefore, the network device may determine, based on time at which signals of the candidate cells cover the terminal, time at which the terminal starts measurement on the candidate cells, to obtain first indication information. Time at which a signal of the satellite covers a terminal may be understood as time at which the satellite may provide a service for the terminal. Correspondingly, start time at which the signal of the satellite covers the terminal may be referred to as service start time or coverage start time.

In an implementation, the time information for starting the measurement may be specifically coordinated universal time (Universal Time Coordinated, UTC). For example, the first indication information may include UTC information for starting the measurement on the one or more candidate cells. The UE starts measurement on a corresponding cell only when measurement start time is reached. For example, each candidate cell has one point of corresponding measurement start time. In another implementation, the measurement start time corresponds to a cell list. In this case, a same point of measurement start time corresponds to a plurality of cells. Assuming that T1 corresponds to a cell #1 and a cell #2, and T2 corresponds to a cell #3, measurement on the cell #1 and the cell #2 may be started at the moment T1, and measurement on the cell #3 may be started at the moment T2. For example, if a satellite #1 and a satellite #2 are two satellites in different orbits, and start time of covering a terminal device by the satellite #1 and start time of covering the terminal device by the satellite #2 are the same, or a difference between the start time of covering the terminal device by the satellite #1 and the start time of covering the terminal device by the satellite #2 is less than a preset threshold, measurement on cells corresponding to the satellite #1 and the satellite #2 may be simultaneously started.

Alternatively, the time information for starting the measurement on the candidate cell may be indicated by coverage start time of the candidate cell. For example, the first indication information may include coverage start time of the one or more candidate cells. Therefore, the terminal may perform autonomous decision-making, based on the coverage start time of the candidate cell, on time for starting the measurement on the cell.

It may be understood that, in the foregoing two manners of indicating the time information for starting the measurement, time at which the terminal starts the measurement on each candidate cell is not earlier than the coverage start time of the candidate cell. In other words, a moment at which the terminal starts the measurement on each candidate cell should be later than a moment at which coverage of the candidate cell for the terminal starts, or a moment at which coverage of the candidate cell for the terminal starts may be used as a moment at which the measurement is started on the candidate cell.

For example, the UE accesses a cell 1 at the moment T1, and then hands over to a cell 2, a cell 3, and a cell 4 successively. When configuring candidate cells for the UE, the base station may send configuration information of the candidate cell 2 to the cell 4 to the UE. In addition, the base station may indicate measurement start time of the cell 2, the cell 3, and the cell 4, for example, T2, T3, and T4 respectively, to the UE through first indication information. Correspondingly, based on the first indication information, the UE may start to measure the cell 2 at the moment T2, start to measure the cell 3 at the moment T3, and start to measure the cell 4 at the moment T4.

For another example, the base station may indicate coverage start time of the cell 2, the cell 3, and the cell 4, for example, T2', T3', and T4' respectively, to the UE through the first indication information. Then, the UE may perform autonomous decision-making, based on the coverage start time of the cell 2, the cell 3, and the cell 4 respectively, on moments for starting measurement on the cell 2, the cell 3, and the cell 4, for example, determine to start measurement on the cell 2 at the moment T2, start measurement on the cell 3 at the moment T3, and start measurement on the cell 4 at the moment T4, where T2≥T2', T3≥T3', and T4≥T4'.

Optionally, the first indication information may further include time information of stopping the measurement on the one or more candidate cells in the at least one candidate cell. The network device may indicate, through the first indication information, time information for stopping the measurement on each candidate cell.

In an implementation, the time information for stopping the measurement may be specifically UTC information. For example, the first indication information may include UTC information for stopping the measurement on the one or more candidate cells. The terminal stops measurement on a corresponding cell when measurement stop time is reached. Alternatively, the time information for stopping the measurement on the candidate cell may be indicated by coverage stop time of the candidate cell. The coverage stop time of the candidate cell is time at which the candidate cell stops covering the terminal or stops providing a service for the terminal.

### (2) Starting measurement based on a distance or an angle

Because a running location of a satellite determines a coverage area of a satellite signal, a candidate cell for a terminal in an NTN scenario is determined. Therefore, a parameter like a distance between the terminal and the satellite, a distance between the terminal and a satellite-related reference point, an angle between a connection line between the terminal and the satellite and a horizontal direction or a vertical direction, or an angle between a connection line between the terminal and the satellite-related reference point and the horizontal direction or the vertical direction may be used as a condition for the terminal to start measurement on a candidate cell corresponding to the satellite.

In view of this, in embodiments of this application, a threshold of a distance or an angle threshold for starting the measurement on the candidate cell is set, so that when cell handover is performed, a value of a distance or an angle between the terminal and the satellite corresponding to the candidate cell is calculated, and is compared with the set distance threshold or angle threshold to determine whether to start the measurement on the candidate cell.

In an implementation, the network device and the terminal may agree upon or a protocol specifies that the distance or the angle between the terminal and the satellite is used as the condition for starting the measurement on the candidate cell. In a subsequent handover procedure, the network device may indicate, to the terminal through the first indication information, a related parameter for calculating the distance or the angle between the terminal and the satellite, so that the terminal determines whether to start the measurement on the candidate cell. Optionally, the network device and the terminal may further agree upon or a protocol specifies a threshold of a distance parameter or an angle parameter, or the network device may further indicate, to the terminal, a threshold of a distance parameter or an angle parameter for starting measurement. For a specific indication manner, refer to the following descriptions.

Alternatively, in an implementation, the first indication information may indicate the terminal to determine, based on a distance or an angle between the terminal and a reference point corresponding to the one or more candidate cells in the at least one candidate cell, to start the measurement on the one or more candidate cells. In other words, the network device may indicate the terminal to use the distance or the angle between the terminal and the reference point corresponding to the candidate cell as a determining condition for starting the measurement.

The reference point may be a location on the ground in a signal coverage area of the satellite, and may be referred to as a sub-satellite point that is a point that is on the ground and is closest to the satellite. Alternatively, the reference point may be a location of the satellite, and may be referred to as an on-satellite point. Because a moving location of the satellite is a factor that determines a coverage cell, and therefore determines a candidate cell for subsequent handover of the terminal, the distance or the angle between the satellite and the terminal may be determined based on the reference point corresponding to the satellite, and is used as a determining condition for starting the measurement on the candidate cell.

The angle between the terminal and the reference point may be specifically an included angle between a connection line between the terminal and the reference point and a horizontal direction or a vertical direction. This is not limited in this application.

In an implementation, the network device may configure a corresponding distance threshold or angle threshold for the terminal. For example, the network device may preconfigure the distance threshold or the angle threshold for the terminal, or configure the distance threshold or the angle threshold through the first indication information. The distance threshold or the angle threshold may be separately a threshold, or may be a numerical interval, namely, a distance value range or an angle value range determined based on at least two values.

In an implementation, for example, the distance threshold may be specifically a first threshold. The network device may send the first threshold to the terminal, where the first threshold indicates to start the measurement on the candidate cell when the distance between the terminal and the reference point corresponding to the candidate cell meets a distance range corresponding to the first threshold. For example, the first threshold is an interval of L1 to L2. When the terminal determines that the distance between the terminal and the reference point corresponding to the candidate cell is within the interval of L1 to L2, the terminal starts the measurement on the candidate cell. For example, the distance within the interval of L1 to L2 may include L1 and L2, or may not include L1 and L2.

Alternatively, in another implementation, if the angle threshold may be specifically a second threshold, the network device may send the second threshold to the terminal, where the second threshold indicates to start the measurement on the candidate cell when the angle between the terminal and the satellite meets an angle range corresponding to the second threshold.

In an implementation, the first indication information may further include location information of the reference point corresponding to the candidate cell, for example, may include location coordinates of the reference point.

For example, the first indication information may carry location coordinates of a reference point corresponding to a cell 1, and the terminal may determine a distance between the terminal and the reference point based on location coordinates of the terminal and the location coordinates of the reference point, to determine, by comparing the first threshold and the distance between the terminal and the reference point, whether to start measurement on the candidate cell.

Alternatively, in another implementation, the first indication information may further include a relative location of the reference point corresponding to the candidate cell. For example, the reference point is a sub-satellite point, and the first indication information may include a location offset of the reference point relative to the satellite. In this case, the first indication information may further include ephemeris information and reference time of the ephemeris information. The ephemeris information sets forth a precise location or track table of the satellite running with time, and reference time of the ephemeris information may be epochTime.

Optionally, when the network device indicates the terminal to determine, based on the distance between the terminal and the reference point corresponding to the one or more candidate cells in the at least one candidate cell, whether to perform the measurement on the candidate cell, the network device may indicate, to the terminal, the location information of the reference point corresponding to the candidate cell. The reference point is a sub-satellite point of the satellite, and the location information of the reference point may be a location offset of the sub-satellite point relative to the satellite. Further, the first indication information may further include ephemeris information and reference time of the ephemeris information. Therefore, the terminal may calculate location information of the satellite in this case based on the ephemeris information and the reference time, and then obtain the distance between the terminal and the reference point based on the location information of the satellite and the location offset of the reference point relative to the satellite. In this implementation, the location information of the reference point may be configured for the terminal through the RRC reconfiguration message.

For example, the network device configures, for the terminal, a distance-based measurement start condition of each candidate cell, including the distance threshold, the location information of the reference point, and the ephemeris information. After receiving the distance threshold, the location information of the reference point, and the ephemeris information, the terminal calculates the distance between the terminal and the reference point. If the distance threshold is met, the terminal starts the measurement.

Similarly, when configuring an angle-based measurement start condition for the terminal, the network device may carry both ephemeris information of each candidate cell and reference time of the ephemeris information. For example, the UE calculates a location of the satellite corresponding to the candidate cell based on the ephemeris information and the reference time, then calculates an angle between a connection line between the terminal and the satellite and the horizontal direction or the vertical direction, and starts the measurement when the angle meets an angle range corresponding to the configured second threshold.

In an implementation, the network device may further configure, for the terminal, a threshold for stopping the measurement on the one or more candidate cells in the at least one candidate cell based on the distance or the angle. The terminal calculates whether the distance or the angle between the terminal and the reference point meets the condition for stopping the measurement. If it is determined that the distance threshold or the angle threshold is met, the terminal stops the measurement on the candidate cell.

Optionally, the first indication information may further include a distance threshold or an angle threshold for stopping the measurement on the one or more candidate cells in the at least one candidate cell. It may be understood that the network device may further indicate, through the first indication information, a distance threshold or an angle threshold for stopping the measurement on each candidate cell.

### (3) Performing measurement in sequence, for example, performing measurement in a sequence of target cells in the RRC reconfiguration message

Only measurement on a candidate cell for a next time of cell handover is started.

In an implementation, the first indication information indicates the terminal to start measurement only on one or more candidate cells for the next time of cell handover. The next time of cell handover indicates that the terminal hands over from a current serving cell to a next target cell.

In other words, the network device may indicate the terminal to start, for a plurality of configured candidate cells, measurement only on a candidate cell for the next time of cell handover in a sequence of handover to the candidate cells, that is, the terminal starts measurement only on a next-hop candidate cell. In this implementation, a sequence of configuration information of candidate cells received (or stored) by the terminal is a sequence in which the terminal hands over to the candidate cells.

In the NTN scenario shown in FIG. 9A, a next-hop candidate cell of the cell 1 is the cell 2, a next-hop candidate cell of the cell 2 is the cell 3, and so on. In this case, the network device may indicate to the terminal, or a protocol defaults that the candidate cells are configured based on a coverage sequence of the candidate cells. In an implementation, when the network device sends configuration information of the candidate cells to the terminal, the network device further sends a handover sequence of the candidate cells to the terminal. For example, the sequence is the cell 1, the cell 2, and the cell 3, and so on. In this way, the terminal device can learn that the next-hop candidate cell of the cell 1 is the cell 2, the next-hop candidate cell of the cell 2 is the cell 3, and so on.

For example, it is assumed that the base station configures only one candidate cell for the UE at each hop, and the base station configures three candidate cells for the UE: the cell 2, the cell 3, and the cell 4. When the UE hands over to the cell 2, measurement on the cell 3 is started, and when the UE hands over to the cell 3, measurement on the cell 4 is started. In this way, redundant measurement performed by the terminal on the candidate cell is avoided, and power consumption is reduced.

In a possible implementation, the network device may configure a plurality of candidate cells for the terminal for each time of cell handover. For example, when the terminal accesses the cell 1, candidate cells for a first time of cell handover after the terminal accesses the cell 1 include the cell 2 and the cell 3, and a candidate cell for a second time of cell handover after a handover procedure for the cell 2 or the cell 3 is completed includes the cell 4. In this case, when configuring a candidate cell for the terminal, the network device may add an identifier to indicate a cell handover round. For example, the cell 2 and the cell 3 are identified as candidate cells belonging to a same hop, and are marked as 1; and the cell 4 is identified as a candidate cell belonging to a next hop, and is marked as 2. In this case, when accessing the cell 1, the terminal may start measurement on the cell 2 and the cell 3; and after the terminal hands over to the cell 2 or the cell 3, the terminal starts measurement on the cell 4. This avoids redundant measurement on the candidate cell by the terminal and reduces power consumption.

In an implementation, the first indication information further indicates the terminal to stop measurement on the serving cell. For example, when the terminal hands over from the cell 1 to the cell 2, the terminal stops measurement on the cell 1.

In an implementation, for a LTM handover scenario, similar to the handover procedure shown in FIG. 8, after the foregoing step 1001 and step 1002, a specific procedure may further include the foregoing step 802 to step 808.

Optionally, the first indication information in step 1002 may be carried in an RRC reconfiguration message for configuring configuration information of a candidate cell (for example, in the LTM handover scenario, the first indication information may be sent in step 802), or may be separately sent.

It should be noted that the foregoing solution for indicating a measurement start condition provided in embodiments of this application may be applied to the LTM handover procedure, and may be applied to another handover procedure, for example, a scenario like CHO, consecutive handover, or dual active protocol stack (Dual Active Protocol Stack, DAPS) handover. This is not limited in this application. The consecutive handover is a scenario in which a terminal performs a plurality of times of cell handover within a period of time, and is not limited to the consecutive LTM handover in the examples in embodiments of this application.

In the foregoing technical solution, the network device indicates a condition for starting measurement on a candidate cell to the terminal, so that the terminal can start or stop, based on a cell handover sequence, measurement on a candidate cell to which handover may be performed, to avoid a problem of terminal energy waste caused by measuring all candidate cells by the terminal. In addition, the foregoing plurality of indication manners may increase flexibility of indicating that cell measurement is started.

In the existing LTM handover procedure described in FIG. 8, after the cell handover is completed, the terminal may store configuration information of the plurality of previously configured candidate cells (including the target cell). Therefore, when the terminal needs to hand over to the candidate cells next time, the network device may directly deliver a handover command without sending the configuration information of the candidate cells again. However, in the NTN scenario, after the terminal completes the cell handover and accesses the target cell, the target cell is used as a new candidate cell for the terminal in a next running periodicity of the corresponding satellite. If the terminal continues storing configuration information of the candidate cell, and the network device reserves a resource of the candidate cell for the terminal, long-time resource waste is caused.

To resolve the foregoing problem, this application further provides a communication method. A LTM handover procedure is optimized, so that after handover is completed, a terminal no longer retains configuration information of a candidate cell configured for the current time of handover, and a network device also releases a resource of the candidate cell. This resolves a resource waste problem and improves resource utilization.

In an implementation, it may be predefined according to a protocol that the terminal deletes configuration information of a source cell and/or another candidate cell for the current time of handover after the handover is completed. Optionally, a protocol may specify that, if an access network of the terminal is an NTN and LTM handover is used, after the terminal completes the handover, the terminal does not store the configuration information of the source cell, and deletes configuration information of a candidate cell other than a target cell for the current time of handover.

In another implementation, the network device may send explicit indication signaling to the terminal, so that after the cell handover is completed, the terminal no longer retains configuration information of a target cell and a candidate cell for the current time of handover.

As shown in FIG. 11, the method may include the following steps.

1101: The terminal sends a measurement report to the network device.

1102: The network device determines at least one candidate cell.

Step 1101 and step 1102 are optional. For specific descriptions, refer to step 1001 and step 1002.

1103: The network device sends second indication information to the terminal.

The second indication information indicates the terminal to delete configuration information of a serving cell (also referred to as a source cell) or delete configuration information of the serving cell as a candidate cell after the terminal hands over from the serving cell to a target cell. In other words, the network device may indicate the terminal not to store the configuration information of the serving cell or the configuration information of the serving cell as the candidate cell after the cell handover is completed. In other words, after each time of handover, a serving cell before the handover is not used as a candidate cell for subsequent handover.

Optionally, if the network device configures one or more candidate cells for the terminal for each time of cell handover, the second indication information indicates that after the cell handover is completed, the terminal may delete configuration information of a candidate cell other than a target cell for the same-hop handover, and delete configuration information of a serving cell before the handover or configuration information of the serving cell as a candidate cell.

For example, the terminal currently accesses a cell 1, and candidate cells for a next time of handover are a cell 2 and a cell 3. When the terminal device hands over to the cell 2, configuration information of the cell 1 and configuration information of the cell 3 are deleted. Alternatively, when the terminal device hands over to the cell 2, the cell 1, the cell 2, and the cell 3 are no longer used as candidate cells.

In an implementation, the second indication information may be carried in an RRC reconfiguration message that is sent by the network device to the terminal and that includes configuration information of a candidate cell (for example, in step 1103a), or may be carried in another message, or may be separately sent. This is not limited in this application.

In an implementation, the network device may further indicate effective duration or effective time of each candidate cell to the terminal through the second indication information. For example, the second indication information may further include first duration, and the first duration is effective duration of a candidate cell. After the first duration expires or times out, the terminal may delete configuration information of the candidate cell. Further, after the first duration expires or times out, the terminal may delete configuration information of a target cell and at least one candidate cell for the current time of cell handover.

In an implementation, the second indication information may indicate that if LTM handover is performed, the terminal deletes configuration information of a source cell for the current time of handover after the handover is completed. Optionally, configuration information of another candidate cell for the current time of handover is further deleted. Specifically, the second indication information indicates that, if the access network of the terminal is an NTN and the LTM handover is used, after the terminal completes the handover, the terminal does not store configuration information of the source cell as a candidate cell, and deletes the configuration information of the another candidate cell for the current time of handover. Optionally, after the handover is completed, the source cell and the candidate cell (including the target cell) for the current time of handover are not used as candidate cells.

In an implementation, step 1103 is optional. In other words, the network device does not need to send the second indication information to the terminal. For example, a protocol specifies that in an NTN scenario, the terminal deletes, by default, configuration information of a part of or all candidate cells after the terminal hands over from the serving cell to the target cell.

In an implementation, for a LTM handover scenario, similar to the handover procedure shown in FIG. 8, a specific procedure may further include the foregoing steps.

1103a: The network device sends an RRC reconfiguration message to the terminal.

For descriptions of step 1103a, refer to the descriptions in step 803.

Optionally, the RRC reconfiguration message includes the second indication information.

A sequence of step 1103 and step 1103a is not limited in this application.

1104: The terminal sends an RRC reconfiguration completion message to the network device.

Optionally, the LTM handover procedure may further include an advance synchronization phase, and may specifically include step 1105.

1105: The terminal implements uplink or downlink synchronization with the target cell.

1106: The terminal measures the configured target cell, and reports an L1 measurement result.

1107: The network device determines, based on the L1 measurement result, whether to perform LTM handover, and if the LTM handover is performed, sends an LTM handover command to the terminal to trigger execution of the handover.

The LTM handover command may be a MAC CE. The MAC CE may carry an identifier of a configuration of the target cell, and the terminal uses the corresponding configuration of the target cell based on the identifier.

Optionally, if the UE needs to perform a random access procedure when handing over to the target cell, step 1108 may be further included. For example, if step 1105 is not performed, that is, the terminal does not obtain TA to implement uplink synchronization, step 1108 may be further included.

1108: The terminal performs random access to the target cell.

1109: The terminal sends a cell handover completion indication message to the network device.

1110: The terminal deletes configuration information of a candidate cell and/or configuration information of the source cell for the current time of cell handover.

In this case, if the network device configures a plurality of candidate cells for each hop of cell handover of the terminal, after the terminal completes the handover, configuration information of all candidate cells of a same hop may be deleted. If the source cell is also a candidate cell (for example, the source cell also belongs to the candidate cell configured for the terminal in step 1103a), the terminal deletes the configuration information of the source cell as the candidate cell.

If the target cell accessed by the terminal is not one of the plurality of candidate cells configured by the network device, the terminal may further delete configuration information of the target cell. For example, if next-hop candidate cells configured by the network device for the terminal are a cell 2 and a cell 3, and the terminal finally hands over to another cell, the terminal may delete configuration information of the cell 2 and the cell 3.

In an implementation, the terminal performs step 1110 based on the second indication information. To be specific, when the terminal receives the second indication information, the terminal performs step 1110; or when the terminal does not receive the second indication information, the terminal does not need to perform step 1110.

In another implementation, a protocol specifies that in the NTN scenario, the terminal performs step 1110 by default after the terminal hands over from the serving cell to the target cell.

In an implementation, after deleting configuration information of a cell, the terminal may further indicate an identifier of the deleted cell to the network device. Correspondingly, for example, the network device receives identification information of at least one cell from the terminal, and may determine that the terminal device deletes configuration information of the at least one cell, so that the network device side may also determine, based on the identifier of the cell deleted by the terminal, to release a resource of the at least one cell.

Optionally, after step 1109, that is, after the network device receives the cell handover completion indication message sent by the terminal, the network device may release a resource of at least one candidate cell and/or a resource (namely, the configuration information of the candidate cell) of the source cell as the candidate cell corresponding to the current time of cell handover of the terminal.

Alternatively, in an implementation, after step 1109, the terminal may send, to the network device, a request message for releasing a candidate cell resource, so that after receiving the request message for releasing the candidate cell resource from the terminal, the network device may release the resource of the at least one candidate cell corresponding to the current time of cell handover of the terminal.

In an implementation, if a network device accessed by the terminal includes a CU and a DU, that the network device releases a resource of a candidate cell and/or a resource of the source cell when the terminal performs handover between a plurality of cells corresponding to a same CU specifically includes: The DU sends a release request to the CU, to request to release the resource of the candidate cell; the CU determines, based on the release request, to release the resource of the candidate cell, and optionally, sends a release response to the DU; and the DU releases, based on the release response, a resource of a candidate cell corresponding to the current time of cell handover of the terminal. Alternatively, the DU may send indication information to the CU, to indicate an identifier of a cell accessed by the terminal. The CU determines, based on the indication information, to release a resource of a candidate cell, and sends, to the DU or another DU, a request to release a resource of the source cell of the terminal and/or a resource of at least one candidate cell corresponding to the current time of cell handover. Alternatively, the CU may learn of the target cell accessed by the terminal, and after the handover is completed, the CU determines to release a resource of a candidate cell. Specifically, the CU sends, to the DU or the another DU, a request to release the resource of the source cell of the terminal and/or the resource of the at least one candidate cell corresponding to the current time of cell handover.

The terminal may perform cell handover between a plurality of candidate cells corresponding to one DU, or performs cell handover between a plurality of candidate cells corresponding to a plurality of DUs, where the plurality of DUs correspond to a same CU. In other words, when the terminal performs handover between a plurality of cells corresponding to a same CU, the CU may indicate a corresponding target DU to release a resource. Alternatively, the DU may send indication information to the CU, to indicate an identifier of a cell accessed by the terminal. The CU determines, based on the indication information, to release a resource of a candidate cell, and sends, to the DU or another DU, a request to release a resource of the source cell of the terminal and/or a resource of at least one candidate cell corresponding to the current time of cell handover.

In another implementation, if a source network device of the terminal, for example, a source base station, includes a CU and a DU, and a target network device of the terminal, for example, a target base station, includes a CU and a DU, when the terminal performs handover between a plurality of cells corresponding to different CUs, for example, the network device releases a resource of a candidate cell, the following is specifically included: A CU corresponding to a source cell sends a release request to a CU corresponding to a target cell, to request to release the resource of the candidate cell. The CU corresponding to the target cell sends, based on the release request, a release request to a DU corresponding to the target cell, to request to release the resource of the candidate cell. The DU corresponding to the target cell releases, based on the release request, the resource of the candidate cell corresponding to the current time of cell handover of the terminal. For example, the CU corresponding to the source cell is a CU in the source network device, and may be referred to as a source CU for short; and the CU corresponding to the target cell is a CU in the target network device, and may be referred to as a target CU for short.

The terminal hands over from the source cell to the target cell, and the CU corresponding to the target cell is different from the CU corresponding to the source cell. In other words, when the terminal performs handover between cells of a plurality of different CUs, the source CU sends a resource release request to the target CU, so that the target CU may indicate, based on the resource release request, the corresponding target DU to release the resource.

In the foregoing implementation, based on a feature of the cell handover in the NTN communication scenario, the network device may indicate the terminal to delete the configuration information of the candidate cell after the cell handover is completed. Correspondingly, the network device may release a resource of the corresponding candidate cell, to avoid long-time invalid resource reservation and effectively improve resource utilization.

In another implementation, if the handover fails, or the terminal hands over to a cell other than the candidate cell, the candidate cell releases the resource reserved for the terminal. Specifically, if the candidate cell does not receive a handover completion message (for example, an RRC reconfiguration completion message) within specified time, the candidate cell releases the resource reserved for the terminal. The specified time may be time at which the terminal is expected to access the target cell, and the time may be carried in a handover request message. Alternatively, when service end time (or coverage end time) of the candidate cell for the terminal expires or times out, the candidate cell releases the resource reserved for the terminal. For example, the service end time of the candidate cell for the terminal may be t-service.

In addition, this application further provides a communication method, to improve a manner in which a network device configures a resource for a terminal, so that signaling overheads for configuring a resource can be effectively reduced. Specifically, the network device side divides configuration information of one candidate cell into two parts. One part of the configuration information is common configuration information (which may also be referred to as cell-level configuration information, cell specific configuration) of the candidate cell, namely, a same part of the configuration information of the candidate cell for all UE. The other part of the configuration information is mainly a different part (which may also be referred to as UE-level configuration information, UE specific configuration) of the configuration information of the candidate cell for the UE. The other part of the configuration information may further include some information that is the same as that of the candidate cell for each UE.

The network side broadcasts the common configuration information of the candidate cell through a broadcast message, so that when sending the configuration information of the candidate cell to the UE, the network side does not need to send the common configuration information of the candidate cell to each UE through a dedicated RRC message (also referred to as a UE-level RRC message, for example, an RRC reconfiguration message) of each UE. In this way, signaling overheads generated during configuration of the candidate cell are reduced. Further, when a plurality of candidate cells configured by the network side for the UE are not in a direct neighboring cell relationship, a current serving cell does not broadcast common configuration information of all candidate cells. The current serving cell broadcasts only common configuration information of a candidate cell that is a neighboring cell of the current serving cell. In this way, signaling overheads caused by broadcasting the common configuration information of the candidate cell by the serving cell can be reduced. It may also be understood that, if the network side determines possible candidate cells for a plurality of times of cell handover when determining candidate cell information for the terminal, one cell may include, in a broadcast message, only common configuration information of a candidate cell corresponding to a next time of cell handover of the terminal, to further reduce signaling overheads of the common configuration information of the candidate cell in the broadcast message. For example, the current serving cell of the UE is a cell 1, and candidate cells configured by the network side for the terminal include a cell 2, a cell 3, and a cell 4. A possible handover sequence of the UE is that the UE hands over from the cell 1 to the cell 2, hands over from the cell 2 to the cell 3, and hands over from the cell 3 to the cell 4. The cell 3 and the cell 4 are not direct neighboring cells of the cell 1. In other words, the UE does not hand over from the cell 1 to the cell 3 or the cell 4. The cell 4 is not a direct neighboring cell of the cell 2. In other words, the UE does not hand over from the cell 2 to the cell 4. In this case, the cell 1 needs to broadcast only common configuration information of the cell 2, and does not need to broadcast common configuration information of the cell 3 and common configuration information of the cell 4. The cell 2 needs to broadcast only the common configuration information of the cell 3, and does not need to broadcast the common configuration information of the cell 4. The cell 3 needs to broadcast only the common configuration information of the cell 4.

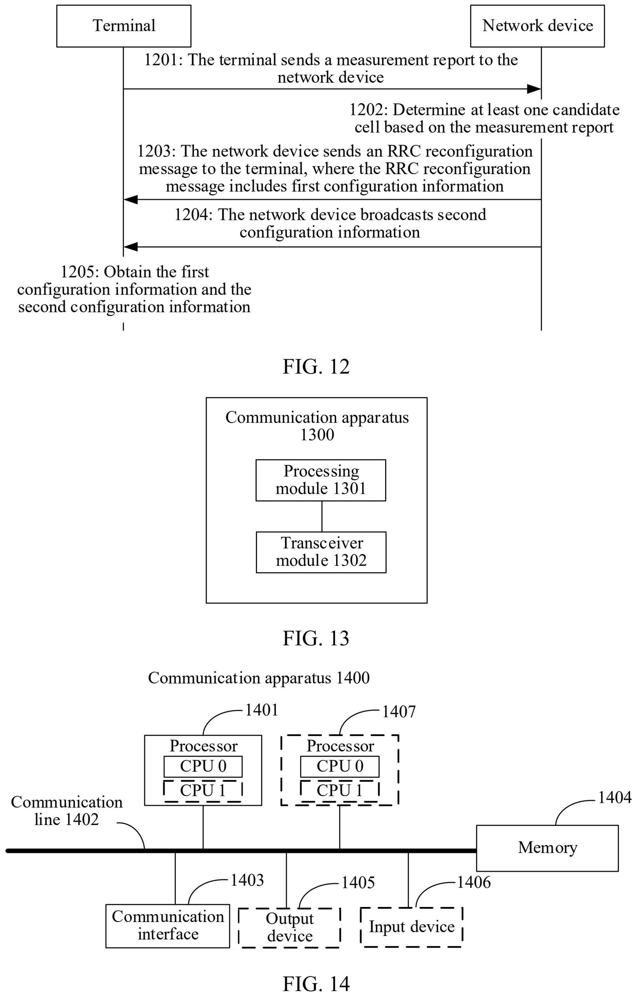

In an implementation, as shown in FIG. 12, the method may specifically include the following steps.

1201: The terminal sends a measurement report to the network device.

1202: The network device determines at least one candidate cell corresponding to the terminal.

Step 1201 and step 1202 are optional.

For example, the network device may determine, based on the measurement report or other related information, the at least one candidate cell corresponding to the terminal.

The following describes a manner of determining and delivering configuration information of a plurality of candidate cells.

It can be learned from the foregoing that a handover scenario includes handover scenarios such as an intra-gNB-DU scenario, an inter-gNB DU intra-gNB CU scenario, and an inter-gNB CU scenario.
1. In the intra-gNB DU scenario, the plurality of candidate cells of the terminal belong to a same DU. When the terminal accesses a cell 1, a CU may determine, for the terminal, a plurality of candidate cells, for example, including a cell 2 to a cell N; or a current serving cell determines only a candidate cell for a next time of cell handover of the terminal, and the candidate cell determines a candidate cell for subsequent handover.

For example, according to a running rule of a satellite, a cell handover sequence of the terminal is the cell 1→the cell 2 (or a cell 3)→a cell 4. When the terminal accesses the cell 1, candidate cells for a first time of cell handover may be the cell 2 and the cell 3, and a candidate cell for a second time of cell handover is the cell 4. In this case, the CU may determine that candidate cells of the terminal are the cell 2, the cell 3, and the cell 4 when the terminal accesses the cell 1. When the cell 1 configures candidate cells for the terminal through a dedicated RRC message, the dedicated RRC message carries only some configuration information (namely, first configuration information described below) of each candidate cell, and does not carry common configuration information (namely, second configuration information described below) of each candidate cell. The cell 1 broadcasts common configuration information of the cell 2 and the cell 3, but does not broadcast common configuration information of the cell 4. Therefore, each cell broadcasts only common configuration information that is of another candidate cell and that is used when the cell is handed over to the another candidate cell. This reduces signaling overheads.

In an implementation, the network device includes a CU and a DU, and the candidate cells are determined by the CU. The CU may send identifiers of the plurality of candidate cells to the DU by sending a UE context modification request (UE Context Modification Request) message or a UE context setup request (UE context setup request) message to the DU, to request to configure the candidate cells for the terminal, and the DU performs access control. Specifically, the DU accepts a part of or all candidate cell requests, and sends a UE context modification response (UE Context Modification Response) message or a UE context setup response (UE Context setup Response) message to the CU, to indicate an access control result of the DU. Then, the DU sends configuration information of the determined candidate cells to the CU. Then, the CU sends the configuration information to the terminal.

Optionally, when the CU sends the identifiers of the configured candidate cells to the DU, the CU sends indication information #A to the DU, to indicate that the DU needs to return only a part (namely, the first configuration information described below) of the configuration information when returning the configuration information of the candidate cells. Alternatively, the indication information #A indicates that the DU does not need to return common configuration information of the candidate cells when returning the configuration information of the candidate cells.

2. In the inter-gNB DU intra-gNB CU scenario, the plurality of candidate cells of the terminal may belong to different DUs but belong to a same CU. Similarly, when the terminal accesses a cell 1, a CU may determine, for the terminal, a plurality of candidate cells, for example, including a cell 2 to a cell N; or a current serving cell determines only a candidate cell for a next time of cell handover of the terminal, and the candidate cell determines a candidate cell for subsequent handover. For details, refer to descriptions in the intra-gNB DU.

3. In the inter-gNB CU scenario, the candidate cells of the terminal may belong to another CU. The inter-gNB CU scenario may also be referred to as an inter-gNB scenario. Interaction between a source CU and a target CU may be referred to as interaction between a source network device (also referred to as a source base station) and a target network device (also referred to as a target base station). In this case, the source network device may request configuration information of a candidate cell from the target network device. For example, the source network device may send a handover request (Handover request) message to the target network device, and the target network device returns a handover acknowledge (Handover acknowledge) message to the source network device, where the handover acknowledge message may carry the configuration information of the candidate cell.

Optionally, in an implementation, in step 1202, when performing handover preparation, the source network device may determine a plurality of candidate cells to which the terminal subsequently hands over. The plurality of candidate cells may correspond to different network devices. The plurality of candidate cells include a candidate cell of a target network device 1 when the source network device is handed over to the target network device 1, and also include a candidate cell of a target network device 2 when the target network device 1 is handed over to the target network device 2. In other words, the source network device determines, for the terminal, a plurality of candidate cells for subsequent cross-network-device handover. A handover acknowledge message sent by the target network device 1 to the source network device carries configuration information of the candidate cell of the target network device 1, and also includes configuration information of the candidate cell of the target network device 2. For example, a handover request message sent by the source network device to the target network device 1 carries identifiers of the plurality of candidate cells determined by the source network device (including an identifier of a candidate cell corresponding to another target network device to which the terminal hands over from the target network device 1). The handover request message sent by the source network device to the target network device 1 carries an identifier of the candidate cell of the target network device 1. Further, the handover request message further carries an identifier of the candidate cell of the target network device 2. After the target network device 1 receives the identifier that is of the candidate cell of the target network device 2 and that is sent by the source network device, the target network device 1 sends a handover request message to the target network device 2, where the handover request message carries the identifier of the candidate cell of the target network device 2. A handover acknowledge message sent by the target network device 2 to the target network device 1 carries the configuration information of the candidate cell of the target network device 2. Then, the handover acknowledge message sent by the target network device 1 to the source network device carries the configuration information of the candidate cell of the target network device 2 and the configuration information of the candidate cell of the target network device 1. Then, the source network device sends the configuration information of the candidate cell of the target network device 1 and the configuration information of the candidate cell of the target network device 2 to the terminal device.

Optionally, in another implementation, in step 1202, when performing handover preparation, the source network device determines only one or more candidate cells of a next target network device 1 of the terminal. Then, the target network device 1 determines one or more candidate cells when the target network device 1 is handed over to another network device. For example, a handover request message sent by the source network device to the target network device 1 carries an identifier of the candidate cell that is of the target network device 1 and that is determined by the source network device. Optionally, the handover request message further carries indication information, indicating that the target network device 1 may prepare a candidate cell of another target network device for the terminal. Then, the target network device 1 determines a candidate cell of a target network device 2 when the terminal hands over from the target network device 1 to the target network device 2. The target network device 1 sends a handover request message to the target network device 2, where the handover request message carries the candidate cell that is of the target network device 2 and that is determined by the target network device 1. Then, a handover acknowledge message sent by the target network device 2 to the target network device 1 carries configuration information of the candidate cell of the target network device 2. Then, a handover acknowledge message sent by the target network device 1 to the source network device carries the configuration information of the candidate cell of the target network device 2 and configuration information of the candidate cell of the target network device 1. Then, the source network device sends the configuration information of the candidate cell of the target network device 1 and the configuration information of the candidate cell of the target network device 2 to the terminal device.

Optionally, the foregoing two implementations may also be independent of the following step 1203 to step 1205. For example, in LTM handover, step 802 to step 808 are used subsequently. For another example, in CHO handover, step 905 to step 908 are used subsequently.

Optionally, the handover request message sent by the source network device to the target network device carries indication information #A, to indicate the target network device to send only the part (namely, the first configuration information described below) of the configuration information when the target network device sends the configuration information of the candidate cell to the source network device. Alternatively, the indication information #A indicates that the target network device does not need to send common configuration information of the candidate cell when sending the configuration information of the candidate cell to the source network device.

Optionally, the source network device is a network device that is initially accessed by the terminal last time.

1203: The network device sends an RRC reconfiguration message to the terminal, where the RRC reconfiguration message includes the first configuration information.

The first configuration information may include a part of the configuration information of the at least one candidate cell. In other words, the first configuration information is only the part of the configuration information of the at least one candidate cell. The terminal cannot obtain all the configuration information of the candidate cell based on a configuration of the current serving cell and the first configuration information. The first configuration information includes at least UE-level configuration information of the at least one candidate cell for the terminal. For example, the first configuration information includes at least one of a C-RNTI identifier, a radio link control layer configuration parameter, a packet data convergence protocol layer configuration parameter, or a service data adaptation protocol layer configuration parameter that is allocated by the candidate cell to the UE in the configuration information of the candidate cell.

1204: The network device broadcasts second configuration information.

The second configuration information includes the common configuration information of a part of candidate cells in the at least one candidate cell determined in step 1202, and the part of candidate cells are candidate cells corresponding to a next time of cell handover performed by the terminal. In addition, different candidate cells may correspond to different second configuration information, that is, the second configuration information is cell-level configuration information. For example, the second configuration information may include serving cell common configuration information (serving cell configuration common) of the candidate cell. The serving cell common configuration information may include a candidate cell identifier, downlink frequency information of the candidate cell, an initial downlink bandwidth part (Bandwidth Part, BWP) of the candidate cell, uplink frequency information of the candidate cell, an initial uplink bandwidth part of the candidate cell, SSB location information of the candidate cell (for example, a time domain position of an SSB in a half frame and an SSB periodicity), a subcarrier spacing of an SSB of the candidate cell, power of the SSB of the candidate cell, and the like.

That the network device broadcasts the second configuration information in step 1204 means that each serving cell broadcasts only second configuration information corresponding to a neighboring cell of the serving cell.

It can be learned that in embodiments of this application, the network device may send UE-level configuration information of each candidate cell to the terminal through a dedicated RRC message (for example, an RRC reconfiguration message), and the cell-level configuration information of the candidate cell may be sent through a broadcast message. Further, each cell may only broadcast cell-level configuration information of a candidate cell for a next time of cell handover of the terminal or only cell-level configuration information corresponding to a neighboring cell of the cell. For example, a serving cell 1 currently accessed by the terminal only broadcast cell-level configuration information of a cell 2 and a cell 3; and the cell 2 or the cell 3 only broadcasts cell-level configuration information of a candidate cell for a next time of cell handover, for example, cell-level configuration information of a cell 4.

It should be noted that the resource configuration solution provided in embodiments of this application may be applied to a LTM handover procedure and another handover procedure, for example, a CHO scenario, a DAPS handover scenario, or a consecutive handover scenario. This is not limited in this application.

A sequence of step 1204 and step 1201 to step 1203 is not limited in this application.

1205: The terminal obtains the first configuration information and the second configuration information.

Correspondingly, the terminal receives the RRC reconfiguration message from the network device, and obtains the first configuration information, that is, obtains the UE-level configuration information of the at least one candidate cell.

The terminal receives the broadcast message from the network device, and obtains the second configuration information, for example, obtains the cell-level configuration information of the candidate cell corresponding to the next time of cell handover performed by the terminal.

For example, the terminal reads, in the current serving cell, a system message of the candidate cell for the next time of handover. The system message includes the second configuration information. The terminal device may obtain, based on the first configuration information and the second configuration information, all configuration information required for accessing the candidate cell.

Optionally, in step 1205, the terminal may obtain the first configuration information and the second configuration information at different moments. A sequence is not limited in this application.

Optionally, if the terminal successfully receives the first configuration information and the second configuration information in the foregoing step 1203 and step 1204, the terminal successfully obtains the cell-level configuration information and the UE-level configuration information that are of the candidate target cell and that are configured by the network device for the terminal. The complete configuration information of the at least one candidate cell may be obtained by combining the cell-level configuration information and the UE-level configuration information.

Optionally, the terminal accesses a target cell. The terminal receives, from the target cell, second configuration information sent by the target cell, and the terminal obtains, based on the first configuration information and the second configuration information that is sent by the target cell, complete configuration information of a candidate cell for a next time of handover of the terminal.

For example, if the terminal currently accesses the cell 1, and then hands over to the cell 2 and the cell 3 successively, the terminal receives an RRC reconfiguration message from a network device of the cell 1, and obtains first configuration information, including UE-level configuration information of the cell 2 and UE-level configuration information of the cell 3. In addition, the terminal may obtain cell-level configuration information of the cell 2 from broadcast information of the network device of the cell 1, so that the terminal obtains complete configuration information of the cell 2 based on the cell-level configuration information of the cell 2 in combination with the UE-level configuration information of the cell 2. Subsequently, after the terminal receives a handover command for handover to the cell 2 (for example, a handover command in the LTM handover) or when the terminal determines to hand over from the cell 1 to the cell 2 (for example, in the CHO handover, the terminal determines that a trigger condition of the cell 2 is met), the terminal hands over to the cell 2. After the terminal accesses the cell 2, the terminal may obtain cell-level configuration information of the cell 3 from broadcast information of a network device of the cell 2, so that the terminal obtains complete configuration information of the cell 3 based on the cell-level configuration information of the cell 3 in combination with the UE-level configuration information of the cell 3.

In an implementation, after obtaining the complete configuration information of the at least one candidate cell, the terminal may send an acknowledge message to the network device corresponding to the current serving cell, to indicate that the terminal has received the complete configuration information of the candidate cell or the common configuration information of the candidate cell. Optionally, the terminal may further send indication information to the network device corresponding to the current serving cell, to indicate a candidate cell whose complete configuration information has been received or a candidate cell whose common configuration information has been received.

It should be noted that the foregoing step 1201 to step 1205 are merely used to describe steps performed by a communication apparatus, and a sequence of the steps is not limited.

In an implementation, the method shown in FIG. 12 is used in a LTM handover scenario. For details, refer to the handover procedures shown in FIG. 8 and FIG. 11. For example, in the method shown in FIG. 12, after step 1204, the foregoing step 1104 to step 1110 may be further included. Details are not described herein again.

In another implementation, the method shown in FIG. 12 is applied to a CHO scenario. In the CHO scenario, the terminal may also obtain the configuration information of the candidate cell in a manner in step 1203 to step 1205. For example, the source base station delivers terminal-level configuration information through an RRC reconfiguration message, and then broadcasts a system message of a neighboring cell. Correspondingly, the terminal receives the RRC reconfiguration message and reads the system message. An execution sequence of receiving the RRC reconfiguration message and reading the system message is not limited. In this manner, complete configuration information of a candidate cell may be obtained. For example, in the method shown in FIG. 12, after step 1204, the foregoing step 906 to step 908 may be further included. Details are not described herein again.

In addition, similar to embodiments in FIG. 11, after the network device receives a cell handover completion indication message sent by the terminal, the network device may release a resource of at least one candidate cell corresponding to a current time of cell handover of the terminal. Alternatively, after sending the cell handover completion indication message to the network device, the terminal may send, to the network device, a request message for releasing a candidate cell resource, so that after receiving the request message for releasing the candidate cell resource from the terminal, the network device may release a resource of at least one candidate cell corresponding to a current time of cell handover of the terminal. Specifically, for a process in which the network device releases the candidate cell resource, refer to content in the foregoing embodiments. Details are not described herein again.

In the foregoing implementations, in the foregoing configuration delivery manner, the network device may separately deliver the cell-level configuration information and the UE-level configuration information of the candidate cell to the terminal, to reduce signaling overheads. In addition, after the cell handover of the terminal is completed, the network device may release a resource of a candidate cell reserved for the terminal, so that resource utilization can be further improved.

It should be noted that the foregoing several implementations provided in this application may be separately used, or the several implementations may be used together. For example, a specific execution step of each implementation is applied to a same procedure. Details are not described in this application one by one.

In addition, this application further provides a communication apparatus. As shown in FIG. 13, the communication apparatus 1300 may include a processing module 1301 and a transceiver module 1302.

Specifically, the communication apparatus 800 may implement functions of the terminal in the possible implementations in FIG. 10 to FIG. 12. For details, refer to detailed descriptions in the foregoing method examples. Details are not described herein again.

In addition, this application further provides a communication apparatus. The communication apparatus may be a network device. As shown in FIG. 13, the communication apparatus 1300 may include a processing module 1301 and a transceiver module 1302. The communication apparatus has a function of implementing the network device in the possible implementations in FIG. 10 to FIG. 12. The function may be implemented by hardware, or may be implemented by hardware executing corresponding software. The hardware or the software includes one or more modules corresponding to the foregoing function.

For example, in the implementations shown in FIG. 10, if the communication apparatus 1300 is configured to implement a function of the network device, the processing module 1301 may be configured to determine at least one candidate cell. The transceiver module 1302 may be configured to send first indication information to a terminal, where the first indication information indicates a condition for the terminal to perform measurement on the at least one candidate cell.

For example, in the implementations shown in FIG. 10, if the communication apparatus 1300 is configured to implement a function of a terminal, the transceiver module 1302 is configured to receive first indication information from a network device, where the first indication information indicates a condition for the terminal to perform measurement on at least one candidate cell.

For a specific execution process and embodiments of the communication apparatus, refer to the steps performed by the terminal or the network device in the foregoing method embodiments and related descriptions. For resolved technical problems and brought technical effect, refer to the content in the foregoing embodiments. Details are not described herein again.

It may be understood that, with reference to FIG. 14, network elements such as a terminal or a network device in embodiments of this application may have a composition structure shown in FIG. 14 or include components shown in FIG. 14. FIG. 14 is a diagram of a structure of a communication apparatus 1400 according to an embodiment of this application. When the communication apparatus 1400 has a function of the terminal in embodiments of this application, the communication apparatus 1400 may be a terminal, or a chip or a system-on-a-chip in a terminal. When the communication apparatus 1400 has a function of the network device in embodiments of this application, the communication apparatus 1400 may be a network device, or a chip or a system-on-a-chip in a network device.

As shown in FIG. 14, the communication apparatus 1400 may include a processor 1401, a communication line 1402, and a communication interface 1403. Further, the communication apparatus 1400 may further include a memory 1404. The processor 1401, the memory 1404, and the communication interface 1403 may be connected to each other through the communication line 1402.

The processor 1401 may be a central processing unit (Central Processing Unit, CPU), a general-purpose processor, a network processor (Network Processor, NP), a digital signal processor (Digital Signal Processor, DSP), a microprocessor, a microcontroller, a programmable logic device, or any combination thereof. Alternatively, the processor 1401 may be another apparatus having a processing function, for example, a circuit, a component, or a software module.

The communication line 1402 is configured to transmit information between the components included in the communication apparatus 1400.

The communication interface 1403 is configured to communicate with another device or another communication network. The another communication network may be the Ethernet, a radio access network (Radio Access Network, RAN), a wireless local area network (Wireless Local Area Network, WLAN), or the like. The communication interface 1403 may be an interface circuit, a pin, a radio frequency module, a transceiver, or any apparatus that can implement communication.

The memory 1404 is configured to store instructions. The instructions may be computer programs.

The memory 1404 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that the memory 1404 may be independent of the processor 1401, or may be integrated with the processor 1401. The memory 1404 may be configured to store instructions, program code, some data, or the like. The memory 1404 may be located inside the communication apparatus 1400, or may be located outside the communication apparatus 1400. This is not limited. The processor 1401 is configured to execute the instructions stored in the memory 1404, to implement the method provided in embodiments of this application.

In an example, the processor 1401 may include one or more CPUs, for example, a CPU 0 and a CPU 1 in FIG. 14.

In an optional implementation, the communication apparatus 1400 includes a plurality of processors. For example, in addition to the processor 1401 in FIG. 14, the communication apparatus 1400 may include a processor 1407.

In an optional implementation, the communication apparatus 1400 further includes an output device 1405 and an input device 1406. For example, the input device 1406 is a device, for example, a keyboard, a mouse, a microphone, or a joystick, and the output device 1405 is a device, for example, a display or a speaker.

It should be noted that the communication apparatus 1400 may be a wearable device, a desktop computer, a portable computer, a network server, a mobile phone, a tablet computer, a wireless terminal, an embedded device, a chip system, or a device having a structure similar to that in FIG. 14. In addition, the composition structure shown in FIG. 14 does not constitute a limitation on the communication apparatus. In addition to the components shown in FIG. 14, the communication apparatus may include more or fewer components than those shown in the figure, some components may be combined, or different component arrangements may be used.

In embodiments of this application, the chip system may include a chip, or may include a chip and another discrete component.

With reference to FIG. 13, for example, a function/implementation process of the processing module 1301 in FIG. 13 may be implemented by the processor 1401 in FIG. 14 by invoking the computer program instructions stored in the memory 1404. For example, a function/implementation process of the transceiver module 1302 in FIG. 13 may be implemented through the communication interface 1403 in FIG. 14.

When the communication apparatus 1300 is an electronic device, the transceiver module 1302 may be a transceiver, and may include an antenna, a radio frequency circuit, and the like, and the processing module 1301 may be a processor, for example, a baseband chip. When the apparatus is a component having the function of the terminal or the network device in the foregoing embodiments, the transceiver module 1302 may be a radio frequency unit, and the processing module 1301 may be a processor. When the apparatus is a chip system, the transceiver module 1302 may be an input interface and/or an output interface of the chip system, and the processing module 1301 may be a processor of the chip system, for example, a central processing unit (central processing unit, CPU).

In some implementations, the processor 1401 in FIG. 14 may invoke the computer-executable instructions stored in the memory 1404, so that the apparatus 1400 can perform the operations performed by the terminal or the network device in the foregoing method embodiments, to implement the foregoing possible implementation methods in this application.

In embodiments, the communication apparatus is presented in a form of functional modules obtained through division in an integrated manner. The "module" herein may be a specific circuit, a processor for executing one or more software or firmware programs, a memory, an integrated logic circuit, and/or another device that may provide the foregoing functions. In a simple embodiment, a person skilled in the art may figure out that the communication apparatus may be in the form shown in FIG. 14.

In an example embodiment, a computer-readable storage medium including instructions or a computer program product is further provided. The instructions may be executed by the processor 1401 of the communication apparatus 1400 to complete the method in the foregoing embodiments. Therefore, for technical effect that can be achieved by the computer-readable storage medium or the computer program product, refer to the foregoing method embodiments. Details are not described herein again.

This application further provides a computer program product. The computer program product includes instructions, and when the instructions are executed, a computer is enabled to perform an operation corresponding to the terminal device or the network device in the foregoing method.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a communication apparatus in which the chip is used performs the operations of the terminal device and the network device in the method provided in the foregoing embodiments of this application.

Optionally, any communication apparatus provided in embodiments of this application may include the system chip.

Optionally, the computer instructions are stored in a storage unit.

An embodiment of this application further provides a communication system. The communication system may include the terminal and the network device in any one of the foregoing implementations.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus.

The protocol described in this application may be a communication protocol or a specification, for example, a 3rd Generation Partnership Project (3rd Generation Partnership Project, 3GPP) communication protocol.

It can be understood that in embodiments of this application, the terminal and/or the network device may perform some or all of the steps in embodiment of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between associated objects.

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features.

It should be noted that in this application, the term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

## Claims

1. A communication method, wherein the method comprises:
determining at least one candidate cell; and
sending first indication information to a terminal, wherein the first indication information indicates a condition for the terminal to perform measurement on the at least one candidate cell.

2. The method according to claim 1, wherein the first indication information indicates time information for starting measurement on one or more candidate cells in the at least one candidate cell.

3. The method according to claim 2, wherein time of starting measurement on each candidate cell is not earlier than coverage start time of the candidate cell.

4. The method according to claim 2 or 3, wherein the first indication information comprises coordinated universal time UTC information of starting the measurement on the one or more candidate cells.

5. The method according to claim 2 or 3, wherein the first indication information comprises coverage start time of the one or more candidate cells.

6. The method according to claim 1, wherein the first indication information indicates the terminal to determine, based on a distance or an angle between the terminal and a reference point corresponding to one or more candidate cells in the at least one candidate cell, to start measurement on the one or more candidate cells.

7. The method according to claim 1 or 6, wherein the method further comprises:
sending a first threshold to the terminal, wherein the first threshold indicates to start the measurement on the candidate cells when a distance between the terminal and a reference point corresponding to the candidate cells meets a distance range corresponding to the first threshold; or
sending a second threshold to the terminal, wherein the second threshold indicates to start the measurement on the candidate cell when an angle between the terminal and a reference point corresponding to the candidate cell meets an angle range corresponding to the second threshold.

8. The method according to claim 6 or 7, wherein the first indication information comprises location information of the reference point.

9. The method according to claim 8, wherein the first indication information further comprises ephemeris information and reference time of the ephemeris information.

10. The method according to claim 1, wherein the first indication information indicates the terminal to start measurement only on one or more candidate cells for a next time of cell handover.

11. The method according to any one of claims 1 to 10, wherein the method is applied to non-terrestrial network NTN communication.

12. A communication method, wherein the method comprises:
receiving first indication information from a network device, wherein the first indication information indicates a condition for a terminal to perform measurement on at least one candidate cell.

13. The method according to claim 12, wherein the first indication information indicates time information for starting measurement on one or more candidate cells in the at least one candidate cell.

14. The method according to claim 13, wherein time of starting measurement on each candidate cell is not earlier than coverage start time of the candidate cell.

15. The method according to claim 13 or 14, wherein the first indication information comprises coordinated universal time UTC information of starting the measurement on the one or more candidate cells.

16. The method according to claim 13 or 14, wherein the first indication information comprises coverage start time of the one or more candidate cells.

17. The method according to claim 12, wherein the first indication information indicates the terminal to determine, based on a distance or an angle between the terminal and a reference point corresponding to one or more candidate cells in the at least one candidate cell, to start measurement on the one or more candidate cells.

18. The method according to claim 12 or 17, wherein the method further comprises:
sending a first threshold to the terminal; and
starting the measurement on the candidate cells when a distance between the terminal and a reference point corresponding to the candidate cells meets a distance range corresponding to the first threshold; or
sending a second threshold to the terminal; and
starting the measurement on the candidate cell when an angle between the terminal and a reference point corresponding to the candidate cell meets an angle range corresponding to the second threshold.

19. The method according to claim 17 or 18, wherein the first indication information comprises location information of the reference point.

20. The method according to claim 19, wherein the first indication information further comprises ephemeris information and reference time of the ephemeris information.

21. The method according to claim 12, wherein the first indication information indicates the terminal to start measurement only on one or more candidate cells for a next time of cell handover.

22. The method according to any one of claims 12 to 21, wherein the method is applied to non-terrestrial network NTN communication.

23. A communication apparatus, comprising a unit or a module configured to perform the method according to any one of claims 1 to 11, or comprising a unit or a module configured to perform the method according to any one of claims 12 to 22.

24. A communication apparatus, comprising one or more processors and one or more memories, wherein
the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 22.

25. A computer-readable storage medium, wherein the computer-readable storage medium stores computer-executable instructions, and when the computer-executable instructions are invoked by the computer, the computer is enabled to perform the method according to any one of claims 1 to 22.

26. A computer program product, wherein when the computer program product runs on a computer, the computer is enabled to perform the method according to any one of claims 1 to 22.
